(19) Europäisches Patentamt
European Patent Office
Office européen des brevets

(11) **EP 3 168 192 A1**

(12) **EUROPEAN PATENT APPLICATION**
published in accordance with Art. 153(4) EPC

(43) Date of publication:
**17.05.2017 Bulletin 2017/20**

(51) Int Cl.:
*C01G 23/00* (2006.01)   *H01M 4/485* (2010.01)
*H01M 10/0562* (2010.01)

(21) Application number: **15826958.9**

(22) Date of filing: **30.07.2015**

(86) International application number:
**PCT/JP2015/071625**

(87) International publication number:
**WO 2016/017745 (04.02.2016 Gazette 2016/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **30.07.2014 JP 2014154597**

(71) Applicant: **Central Glass Co., Ltd.
Ube-shi, Yamaguchi 755-0001 (JP)**

(72) Inventors:
• **ESAKI, Ryota**
  **Ube City**
  **Yamaguchi 755-0001 (JP)**
• **NISHIZAKI, Tsutomu**
  **Ube City**
  **Yamaguchi 755-0001 (JP)**
• **TAMURA, Tetsuya**
  **Ube City**
  **Yamaguchi 755-0001 (JP)**

(74) Representative: **Manitz Finsterwald Patentanwälte
PartmbB
Martin-Greif-Strasse 1
80336 München (DE)**

(54) **PRECURSOR OF LITHIUM TITANATE COMPOSITE PRODUCT AND METHOD FOR PRODUCING SAME**

(57) Provided is a precursor with which it is possible to form a solid electrolyte and negative electrode active material while preventing loss of mass during firing at 1,000°C or lower. A precursor for forming a composite product of lithium titanate and lithium lanthanum titanate by firing, wherein a precursor of a lithium titanate composite product is used that is characterized in comprising a solid material that includes a composite salt of Li and Ti and an La source compound. Such a precursor of a lithium titanate composite product is obtained by a production method that is characterized in including a step for forming a solid material by heating a mixture that includes at least a Ti source, a Li source, and solvent by solvothermal treatment.

FIG. 10

La SOURCE   Ti SOURCE   Li SOURCE

← SOLVENT
SOLVOTHERMAL TREATMENT

Li–Ti COMPOSITE SALT + La SOURCE
(PRECURSOR)

FIRING

LTO PHASE + LLTO PHASE
(COMPOSITE PRODUCT)

EP 3 168 192 A1

**Description**

TECHNICAL FIELD

The present invention relates to a precursor of a lithium titanate composite product and a method for producing the same, and in particular, it relates to a precursor for forming a lithium titanate composite product by firing, which is useful as a composite (below referred to as "electrode composite") where a lithium-containing negative electrode active material which can be used as a negative electrode of a lithium ion battery, and a lithium-containing solid electrolyte are composited, and a method for producing the same.

BACKGROUND ART

Secondary batteries are utilized for portable devices such as mobile phones and notebook computers and the like, machinery for transportation such as automobiles or airplanes and the like, and electric power storage equipment such as those used for electric power smoothing, and for all of these applications there is demand for increased energy density. Currently, the practical secondary battery with the highest energy density is the lithium ion battery, and research for further increasing the energy density while maintaining safety is being undertaken. As one part of this, research on an all-solid battery (a battery where a solid electrolyte is used instead of an electrolyte solution), which is a technical improvement of the lithium ion battery, is being carried out.

All-solid batteries are ones where the negative electrode, the electrolyte, and positive electrode constituting the battery are all solid, and therefore, by repeatedly laminating a negative electrode layer, a solid electrolyte layer, and a positive electrode layer, it is possible to produce a battery having a series structure without using copper wiring or the like, and they are therefore thought to be applicable for automobile use or electric power storage use. Further, an all-oxide type all-solid battery where the negative electrode active material, the solid electrolyte, and the positive electrode active material are all oxides can be expected to be effective for safety and high temperature resistance, in addition to increased energy density.

As one type of negative electrode active material of a lithium ion battery, lithium titanate $Li_4Ti_5O_{12}$ (also referred to as LTO) which is an oxide having a spinel type crystal structure is known (Patent Document 1). There is almost no change in the lattice size of $Li_4Ti_5O_{12}$ in association with charging and discharging, and therefore, compared to a graphite-type carbon material (often used as a negative electrode of lithium ion batteries, even though it is known to expand and contract on the order of 10% in the c axis direction between the graphite layers in association with charging and discharging) and the like, and is thought to have excellent properties as a negative electrode active material for all-solid batteries.

On the other hand, as a candidate for a solid electrolyte constituting an all-oxide type negative electrode composite, lithium lanthanum titanate $Li_{3x}La_{2/3-x}TiO_3$ ($0 \leq x \leq 1/6$; also referred to as LLTO) which has a perovskite type crystal structure has been noted because of having a high lithium ion conductivity (Patent Document 2).

For the electrodes of a lithium ion battery, the electrolyte solution which permeates the space between the positive electrode and the negative electrode functions as a conduction path for the lithium ions, but because an electrolyte solution is not used in an all-solid battery, it is preferable to make the electrode a composite where the active material and the solid electrolyte are mixed (Patent Documents 3 and 4).

Further, as shown below, compositing techniques for forming a composite where negative electrode active materials and solid electrolytes are mixed have been studied not only for application to all-solid batteries, but also as methods for improving the performance of electrodes used for lithium ion batteries, and it has been reported that as a result of a doping method with the objective of improving the performance of negative electrode active materials, it was possible to obtain a material where a solid electrolyte material effectively is effectively associated with a negative electrode active material.

For example, Non-Patent Document 1 discloses a production method of obtaining a fired body composition of $Li_4Ti_{5-x}La_xO_{12}$ ($0 \leq x \leq 0.2$) by using lithium carbonate as a lithium source, lanthanum nitrate hexahydrate as a lanthanum source, and titanium dioxide as a titanium source, mixing these in a wet-type ball mill and then drying to make a precursor, and firing this at 850ºC. In this method, the formation of a solid solution where the La is doped in an LTO phase is shown.

Patent Document 1: Japanese Unexamined Patent Application, Publication No. 2012-104280
Patent Document 2: Japanese Unexamined Patent Application, Publication No. 2013-140762
Patent Document 3: Japanese Unexamined Patent Application, Publication No. 2010-033877
Patent Document 4: Japanese Unexamined Patent Application, Publication No. 2013-080637
Non-Patent Document 1: Journal of Power Sources 214 (2012) pp. 220-226

## DISCLOSURE OF THE INVENTION

Problems to be Solved by the Invention

In an electrode composite, negative electrode active material particles and solid electrolyte material particles are required to be in close contact at a low resistance surface, but in the method disclosed in Non-Patent Document 1, the precursor is made by mixing the raw material mixture before firing in a wet type ball mixer, and firing is done at 850°C, but when firing the mass reduction is large, and the uniformity and density of the synthesized solid electrolyte are reduced, and there has been the problem that the electric conductivity of the lithium ions deteriorates.

The present invention is one made for solving such problems of the prior art, and has the objective of providing a precursor which can provide a composite product which is useful for electrode composites where a solid electrolyte and a negative electrode active material are composited, while preventing mass reduction during firing, by firing at 1000°C or less.

Means for Solving the Problems

The present inventors, as a result of diligent study, discovered that by firing a precursor comprising a composite salt of Li and Ti, and an La source compound at a low temperature of no greater than 1000°C, it is possible to provide a composite product (which in the present specification may be referred to as "lithium titanate composite product" or simply as "composite product") where an LLTO phase and an LTO phase are composited while suppressing mass loss, and that this lithium titanate composite product is useful as an electrode composite for a lithium secondary battery where an LLTO phase which is a solid electrolyte and an LTO phase which is a negative electrode active material are composited, and thus completed the present invention. Specifically, the present invention provides the following.

The first aspect of the present invention is a precursor of a lithium titanate composite product for forming a composite product of lithium titanate and lithium lanthanum titanate by firing, characterized in consisting of a solid material comprising a composite salt of Li and Ti, and an La source compound.

The second aspect of the present invention is a precursor according to the first aspect characterized in that the composite salt is represented by $Li_aH_bTi_cO_d$ ($a > 0$, $b \geq 0$, $c > 0$, $d > 0$, and $a + b + 3c \leq 2d \leq a + b + 4c$).

The third aspect of the present invention is a precursor according to the first or second aspect characterized in that the solid material is obtained by a solvothermal method.

The fourth aspect of the present invention is a precursor according to any one of the first to third aspects characterized in that the composite salt has a degree of conversion into composite salts (%) defined by the below formula of no less than 30%: degree of conversion into composite salts (%) = (molar equivalent of Li - molar equivalent of counter-anion) x 100/(molar equivalent of Li).

The fifth aspect of the present invention is a precursor according to any one of the first to fourth aspects characterized in that in an X-ray diffraction pattern of the solid material, a full width at half maximum of a diffraction line with a greatest intensity of the composite salt is no less than 0.25°.

The sixth aspect of the present invention is a precursor according to any one of the first to fifth aspects characterized in that La/Ti, which is a molar ratio of La with respect to Ti in the solid material, is 0.0001 < La/Ti < 0.66.

The seventh aspect of the present invention is a precursor according to any one of the first to fifth aspects characterized in that (Li + La)/Ti, which is a ratio of a total of a molar number of Li atoms and a molar number of La atoms with respect to a molar number of Ti atoms comprised in the solid material, is 0.67 < (Li + La)/Ti < 1.1.

The eighth aspect of the present invention is a method for producing the precursor of a lithium titanate composite product according to the first aspect, characterized in comprising a step of forming the solid material by heating a mixture comprising an La source, a Ti source, an Li source, and a solvent by a solvothermal treatment.

The ninth aspect of the present invention is a method for producing the precursor of a lithium titanate composite product according to the first aspect, characterized in comprising a simultaneous precipitation treatment step of obtaining a precipitate comprising an oxide or hydroxide of La, and an oxide or hydroxide of Ti by mixing an aqueous solution comprising an La cation and a Ti cation and a basic aqueous solution, and a step of forming the solid material by a solvothermal treatment of a mixture comprising the precipitate obtained in the simultaneous precipitation step, an Li source, and a solvent.

The tenth aspect of the present invention is a method for producing the precursor of a lithium titanate composite product according to the first aspect, characterized in comprising a solvothermal treatment step of forming a composite salt of Li and Ti by a solvothermal treatment of a mixture comprising a Ti source, an Li source, and a solvent, and a step of adding an La source to the composite salt and forming the solid material.

The eleventh aspect of the present invention is a method for producing the precursor of a lithium titanate composite product according to the first aspect, characterized in carrying out a first solvothermal treatment step of forming a composite salt of Li and Ti by a solvothermal treatment of a mixture comprising a Ti source, an Li source, and a solvent, and a second solvothermal treatment step of adding an La source to the composite salt and forming the solid material by a solvothermal treatment.

The twelfth aspect of the present invention is a method for producing a precursor of a lithium titanate composite product according to the first aspect, characterized in comprising a simultaneous precipitation treatment step of obtaining a precipitate comprising an oxide and/or hydroxide of La, and an oxide and/or hydroxide of Ti by mixing an aqueous solution comprising an La cation and a Ti cation and a basic aqueous solution, a first solvothermal step of forming a solid material by a solvothermal treatment of a mixture comprising the precipitate obtained in the simultaneous precipitation treatment step, an Li source, and a solvent, and a second solvothermal treatment step of further adding an acid and forming the solid material by a solvothermal treatment. The thirteenth aspect of the present invention is a method for producing the precursor according to the ninth or twelfth aspect, characterized in that a molar equivalent of a base of the basic aqueous solution used in the simultaneous precipitation treatment step is greater than a molar equivalent of the counter-anions (however, excluding oxide ions and hydroxide ions) of the La cation and the Ti cation in the aqueous solution obtained by the aqueous solution preparation step.

The fourteenth aspect of the present invention is a method for producing the precursor according to the ninth or twelfth aspect, characterized in that a pH of the aqueous solution obtained in the aqueous solution preparation step is less than 7, and a pH of the basic aqueous solution used in the simultaneous precipitation step is no less than 8.

The fifteenth aspect of the present invention is a method for producing the precursor according to the eighth aspect, characterized in that a single salt of La is used as the La source, and a single salt of Ti is used as the Ti source.

The sixteenth aspect of the present invention is a method for producing a composite product characterized in comprising a step of obtaining a precursor by the method for producing the precursor according to any one of the eighth to fifteenth aspects, and a firing step of firing the precursor.

The seventeenth aspect of the present invention is a method for producing a composite product characterized in comprising a firing step of firing the precursor according to any one of the first to seventh aspects.

The eighteenth aspect of the present invention is a method for producing a composite product according to the sixteenth or seventeenth aspects, characterized in that in the firing step, the precursor is fired at no higher than 1000ºC.

Effects of the Invention

According to the present invention, it is possible to provide a precursor which can provide a composite product useful for electrode composites where a solid electrolyte and a negative electrode active material are composited, while preventing mass reduction during firing, by firing at no more than 1000ºC.

BRIEF DESCRIPTION OF THE DRAWINGS

Fig. 1 is powder X-ray diffraction patterns of a precipitate according to Example 1, and precursors according to Examples 1-1 to 1-3.
Fig. 2 is powder X-ray diffraction patterns of lithium titanate composite products according to Examples 1-1 to 1-3.
Fig. 3 is powder X-ray diffraction patterns of precursors according to Examples 2-1 to 2-2.
Fig. 4 is powder X-ray diffraction patterns of lithium titanate composite products according to Examples 2-1 to 2-2.
Fig. 5 is powder X-ray diffraction patterns of precursors according to Examples 4 and 5.
Fig. 6 is powder X-ray diffraction patterns of lithium titanate composite products according to Examples 4 and 5.
Fig. 7 is a flow chart of a process for producing the lithium titanate composite product in Example 1-1.
Fig. 8 is a flow chart of a process for producing the lithium titanate composite product in Example 4.
Fig. 9 is a flow chart of a process for producing the lithium titanate composite product in Examples 5-1 and 5-2.
Fig. 10 is a flow chart of a process for producing the lithium titanate composite product according to Example 6.

PREFERRED MODE FOR CARRYING OUT THE INVENTION

Below, the precursor and the method for producing the precursor of the lithium titanate composite product of the present invention are explained in detail.

Precursor

The precursor according to the present invention is a precursor for forming by firing, a composite product of lithium titanate and lithium lanthanum titanate used as an electrode composite comprising a negative electrode active material and a solid electrolyte of a lithium secondary battery, and comprises a composite salt of Li and Ti, and an La source compound.

The composite salt of Li and Ti according to the present invention is represented by $Li_aH_bTi_cO_d$ (a > 0, b ≥ 0, c > 0, d > 0, and a + b + 3c ≤ 2d ≤ a + b + 4c), and is preferably obtained by a solvothermal method. Further, the precursor according to the present invention can in particular provide a composite product of lithium titanate and lithium lanthanum titanate by firing at no more than 1000oC. This composite product can be used as an electrode composite (which may be referred to in the following as "negative electrode active material - solid electrolyte composite" or "electrode composite") where a lithium titanate having a spinel type crystal structure as a lithium-comprising negative electrode active material, and a lithium lanthanum titanate having a perovskite type crystal structure as a lithium-comprising solid electrolyte material, are composited. Further, La for forming an LLTO phase may be present in the precursor in a state of a single salt such as an oxide, hydroxide or the like.

The identification of the crystal phase can be carried out by using powder X-ray diffraction. For the reference patterns of the diffraction lines, the ICDD database was used. The ICDD database stores a great number of patterns including both stoichiometric compounds and nonstoichiometric compounds, but the crystal phase included in the precursor has a low degree of crystallinity, and thus it is necessary to carry out the identification of compounds considering that the properties of nonstoichiometric compounds may also be shown. For example, in powder X-ray diffraction using the Kα line of Cu, a diffraction line where 2θ is in the vicinity of 11° could be identified as $(Li_{1.81},H_{0.19})Ti_2O_5 \cdot 2H_2O$ [ICDD No. 00-047-0123] or $Li_{0.77}H_{1.23}(Ti_3O_7) \cdot 2H_2O$ [ICDD No. 00-040-0304], but the presence of nonstoichiometric compounds must also be considered, and it must be cautioned that it may not be identical to the composition in the ICDD card. In the same way, a diffraction line where 2θ is in the vicinity of 43 to 44° could be identified as $(Li_2TiO_3)_{1.333}$ [ICDD No. 01-075-0614], $LiTiO_2$ [ICDD No. 00-016-0223], or $Li_4Ti_5O_{12}$ [ICDD No. 00-049-0207], but because the crystallinity is low, it is necessary to consider that shifts of the diffraction angles or changes of the intensity ratios of plural diffraction lines may arise. However, in all cases, these diffraction lines are for composite salts of Li and Ti represented by the general formula $Li_aH_bTi_cO_d$ (a > 0, b ≥ 0, c > 0, d > 0, and a + b + 3c ≤ 2d ≤ a + b + 4c). Further, Ti cations are often tetravalent, but trivalent ones are also relatively stable and the composite salt may also comprise trivalent titanium, and therefore, it is stipulated that a + b + 3c ≤ 2d ≤ a + b + 4c.

When the crystal phase included in the precursor has a low degree of crystallinity, and powder X-ray diffraction analysis using the Kα line of Cu is carried out on the precursor, the full width at half maximum of the diffraction line of the composite salt having the greatest intensity is preferably no less than 0.25o, and more preferably no less than 0.8o. Herein, the full width at half maximum is the FWHM, which means the peak width at the position of half of the peak height. Further, in the present invention, the full width at half maximum of the diffraction line of the composite salt having the greatest intensity is commonly no greater than 2o.

Further, the diffraction line width is taken as having a correspondence relationship with the size of the crystallites according to the Scherrer formula below.

$$\tau = K\lambda/\beta\cos\theta$$

Herein, τ is the size of the crystallites, K is a shape factor which typically has a value of about 0.9, λ is the wavelength of the X-rays used in the diffraction measurement, which is 0.154 nm for the Kα line of Cu, θ is the Bragg angle of the diffraction, and β is the diffraction width which is typically the full width at half maximum (FWHM, the units are converted to radians for inputting to the formula).

Further, the composite salt of Li and Ti represented by $Li_aH_bTi_cO_d$ is formed of a compound of Li cations and Ti cations, therefore in a firing step the Li is not readily eliminated, the volatile component is small, and mass reduction is low. On the other hand, in the case that a single salt of lithium and a single salt of titanium are physically mixed by a milling process or the like of the prior art, in the firing step, the lithium in the state of a single salt is readily eliminated, and because the carbonate ions or hydroxide ions which are counter-anions of the lithium single salt have a large component which volatilizes, the mass reduction is large.

Further, for the composite salt included in the precursor according to the present invention, if the Li amount present as $Li_aH_bTi_cO_d$ (a > 0, b ≥ 0, c > 0, d > 0, and a + b + 3c ≤ 2d ≤ a + b + 4c) of the total Li amount in the precursor is taken as the "degree of conversion into composite salts (%)", this degree of conversion into composite salts is preferably no less than 30%.

In the case that the degree of conversion into composite salts is too low, there is too much Li present in the state of a single salt, and therefore, the component which is eliminated as gas in the firing step becomes large, the mass reduction during the firing becomes large, and it is difficult to obtain a compact electrode composite after firing. Further, the higher the degree of conversion into composite salts, the more the Li in the state of a single salt can be reduced, and because the mass reduction during firing can be made small, there is no problem even if it is 100%.

The degree of conversion into composite salts with respect to the precursor is calculated from the formula below.

$$\text{degree of conversion into composite salts (\%)} = \text{(molar}$$

$$\text{equivalent of Li} - \text{molar equivalent of counter-anion)} \times 100\ /$$

$$\text{(molar equivalent of Li)}$$

Herein, the counter-anion is an anion which counters the Li ion which is not salt-composited, and in the case that a lithium halide is used as the lithium raw material, it is the halide ion, in the case that a carbonate is used, it is the carbonate ion, in the case that lithium hydroxide is used, it is the hydroxide ion, and in the case that lithium oxide is used, it is the oxide ion.

It is possible to measure the amount of the halide ion and carbonate ion by quantifying the amount of the halogen or carbon by elemental analysis. In the case of using lithium hydroxide, lithium hydroxide monohydrate, or lithium oxide as the Li source, quantification can be accomplished by the two following methods.

1) Converting the lithium hydroxide, lithium hydroxide monohydrate, or lithium oxide to lithium carbonate by reacting the precursor by heating to 100ºC under a flow of carbon dioxide gas, and calculating the amount of lithium carbonate by elemental analysis of the C amount of the sample after the conversion. However, in the case that a sample including Li which has been salt-composited is heat treated at 100ºC under a carbon dioxide gas flow, as a result of analysis by X-ray diffraction of the sample before and after the treatment, it is known that a part of the salt-composited Li will also react with the carbon dioxide gas and become lithium carbonate, and the true degree of conversion into composite salts with respect to the sample is thought to be greater than the measured value.

2) Converting the lithium oxide and lanthanum oxide to lithium hydroxide and lanthanum hydroxide by exposing a sample to the atmosphere for no less than one week, quantifying the hydroxyl group amount by elemental analysis of the H amount of the sample after the conversion, and calculating by subtracting the hydroxyl group amount of the lanthanum hydroxide equivalent from the lanthanum amount determined by metal analysis. In this method, because the hydrogen included in the water is calculated in excess, the true degree of conversion into composite salts with respect to the sample is believed to be greater than the measured value.

Further, the included molar ratio of La with respect to Ti in the precursor according to the present invention, expressed as La/Ti, is preferably La/Ti < 0.66, and is more preferably La/Ti < 0.2. Further, La/Ti is preferably > 0.0001. In the case that La/Ti $\geq$ 0.67, La in excess of that required by the electrode composite comprising LTO and LLTO in the target mixed composition will remain after the firing, and therefore, there is a tendency for impurity phases other than the LTO and LLTO such as $La(OH)_3$, $La_2O_3$, $La_2Ti_2O_7$ and the like to arise by firing. Further, the larger La/Ti, the lower the proportion of the LTO phase accounting for the whole, and the capacity will be reduced. On the other hand, in the case that La/Ti $\leq$ 0.0001, there is a tendency for the LLTO phase to not noticeably occur, and the effect of increasing the electrical conductivity is not sufficiently obtained.

The ratio of the total of the molar number of Li and the molar number of La with respect to the molar number of Ti included in the precursor according to the present invention, expressed as (Li + La)/Ti, is preferably 0.67 < Li + La)/Ti < 1.1, and more preferably 0.7 < Li + La)/Ti < 0.95. When (Li + La)/Ti is greater than the appropriate range, impurity phases such as $Li_2TiO_3$ and the like are readily formed after firing, and when (Li + La)/Ti is less than the appropriate range, impurity phases such as $La_4Ti_9O_{24}$ and the like are readily formed after firing.

The precursor according to the present invention is capable of generating LTO which is a negative electrode active material and LLTO which is a solid electrolyte material, by a firing step at a low temperature.

The precursor according to the present invention comprises a composite salt of Li and Ti, and the Li in this composite salt is not readily eliminated even in the firing step, and it is possible for the composition of the electrode composite after firing to be made uniform. Further, the titanates in the composite salt have a smaller component which volatilizes by heating than carbonate ions or the hydroxide ions, and therefore, mass reduction in the firing step does not readily arise, and it is possible to obtain a compact electrode composite.

Method for Producing the Precursor

In the present invention, as a method for producing the precursor, the below first through fourth methods for production are shown as examples. In order to obtain a composite salt of Li and Ti, the method for producing the precursor of the present invention requires at least a solvothermal treatment of a mixture comprising a Ti source, an Li source, and a solvent. An La source compound may be added later as in the later described second method for producing the precursor, but it is also possible to use a method for producing a precursor comprising a step of heating by a solvothermal treatment a mixture comprising an La source, a Ti source, and an Li source. This production method corresponds to a broader concept of the first method for producing the precursor, a variant of the second method for producing the precursor, the third method for producing the precursor, and the fourth method for producing the precursor. By such a solvothermal treatment step, it is possible to obtain a precursor consisting of a solid material comprising a composite salt of Li and Ti represented by $Li_aH_bTi_cO_d$ ($a > 0$, $b \geq 0$, $c > 0$, $d > 0$, and $a + b + 3c \leq 2d \leq a + b + 4c$), and an La source compound.

First Method for Producing the Precursor

As a method for producing the precursor according to the present invention, a method for producing a precursor characterized in comprising an aqueous solution preparation step of preparing an aqueous solution comprising an La cation and a Ti cation, a simultaneous precipitation treatment step of obtaining a precipitate comprising an oxide and/or hydroxide of La, and an oxide and/or hydroxide of Ti by mixing the aqueous solution obtained in the aqueous solution preparation step and a basic aqueous solution, and a step of forming a solid material by a solvothermal treatment of a mixture comprising the precipitate obtained in the simultaneous precipitation treatment step, an Li source compound, and a solvent, may be mentioned as an example.

[Aqueous Solution Preparation Step]

In the aqueous solution preparation step, an aqueous solution comprising an La cation and a Ti cation is prepared. As an La cation, $La^{3+}$ may be mentioned, and as a Ti cation, $Ti^{4+}$ may be mentioned. The La cation and the Ti cation may respectively form complexes with water, ammonia, oxide ions, hydroxide ions, or the later described counter-anions as ligands. As the counter-anions of the La cation and the Ti cation, besides oxide ions and hydroxide ions, for example, chlorine-containing anions such as chloride ions or the like, or nitrate anions or the like may be mentioned. The above mentioned counter-anions may be used individually, or may be used in combinations of two or more.

The above mentioned aqueous solution is prepared, for example, by dissolving a lanthanum compound which produces La cations upon dissolving, and a titanium compound which produces Ti cations upon dissolving, in water or an acidic aqueous solution. As such lanthanum compounds and titanium compounds, for example, chlorides, oxychlorides, hydroxides, oxides, and nitrates may be mentioned, and from the point of being easy to acquire and the point of being inexpensive, chlorides or oxychlorides are preferable. Further, from the point of being easy to dissolve, nitrates are preferable. The forms of the above mentioned lanthanum compound and titanium compound are not particularly limited, and for example, a solid such as a powder or the like, or an aqueous solution or the like may be mentioned. Each of the above mentioned lanthanum compounds and titanium compounds may be used individually, or in may be used in combinations of two or more.

The aqueous solution prepared in the aqueous solution preparation step preferably has a pH of less than 7, namely, it is preferably acidic. La cations have high aqueous solubility in the range from strongly acidic to weakly acidic, but Ti cations have high aqueous solubility only in the strongly acidic range. Accordingly, the aqueous solution prepared in the aqueous solution preparation step, from the viewpoint of stability, is preferably strongly acidic (for example, a pH of no higher than 3).

[Simultaneous Precipitation Treatment Step]

In the simultaneous precipitation treatment step, a precipitate comprising an oxide and/or hydroxide of lanthanum and an oxide and/or hydroxide of titanium is obtained by mixing the aqueous solution obtained in the aqueous solution preparation step and a basic aqueous solution. The method for mixing the aqueous solution obtained in the aqueous solution preparation step and the basic aqueous solution is not particularly limited, and for example, a method of instilling or spraying the aqueous solution obtained in the aqueous solution preparation step into the basic aqueous solution may be mentioned.

The pH of the basic aqueous solution, from the viewpoint of precipitation speed, is preferably no less than 8. The basic aqueous solution is not particularly limited, and for example, ammonia water, and a lithium hydroxide aqueous solution may be mentioned. From the point of being easy to acquire and the point of being inexpensive, ammonia water is preferable. Further, from the viewpoint of preventing contamination of the solid electrolyte, it is preferable for the alkali cation to be a lithium ion, namely, a lithium hydroxide aqueous solution, whose cation constitutes the solid electrolyte, is preferable.

The molar equivalent of the base of the basic aqueous solution used in the simultaneous precipitation treatment step is preferably greater than the molar equivalent of the counter-anion (however, excluding the oxide ion and hydroxide ion) of the La cations and Ti cations in the aqueous solution obtained in the aqueous solution preparation step, and more preferably is a large excess (for example, on the order of no less than two times). If the molar equivalent of the base of the basic aqueous solution is greater than the molar equivalent of the above described counter-anion, even after having mixed the aqueous solution obtained in the aqueous solution preparation step and the basic aqueous solution, it is easy to sufficiently maintain the alkalinity of the mixed solution.

The precipitate obtained in the simultaneous precipitation treatment step is suitably isolated and washed. The isolation method is not particularly limited, and for example, centrifugation, decantation, and filtration may be mentioned. Further, the solvent used for washing is not particularly limited, and from the point of being easy to acquire and the point of being inexpensive, water may be preferably mentioned as an example.

In the aqueous solution preparation step according to the present invention, it is possible to use low cost raw materials such as chlorides and the like, instead of expensive alkoxides used in the sol-gel method. Further, the precipitate obtained in the simultaneous precipitation treatment step can prevent the large mass reduction which accompanies the removal of organic ligands or the like during firing which arises in the sol-gel method.

[Solvothermal Treatment Step]

In the solvothermal treatment step a precursor consisting of a solid material comprising a composite salt of Li and Ti represented by $Li_aH_bTi_cO_d$ (a > 0, b ≥ 0, c > 0, d > 0, and a + b + 3c ≤ 2d ≤ a + b + 4c) and an La source compound is obtained by mixing a solid or a solution comprising an La cation and Ti cation of the precipitate or the like obtained in the simultaneous precipitation treatment step, a lithium source compound, and a solvent, and heating under a pressure greater than atmospheric pressure.

The lithium source compound is not particularly limited, and for example, lithium carbonate, lithium chloride, lithium fluoride, lithium hydroxide, lithium nitrate, lithium acetate, and their hydrates may be mentioned. These lithium compounds may be used individually, or may be used in combinations of two or more. Further, the form of the lithium compound may be, for example, a solid such as a powder or the like, or may be an aqueous solution, and is not particularly limited.

The content ratio of La with respect to Ti in the mixture before carrying out the solvothermal treatment step is preferably 0.0001 < La/Ti < 0.66. If the ratio of La/Ti in the mixture is within the defined range, the proportion of La/Ti in the obtained precursor will be within the target range.

In the present invention, as the solvothermal treatment, a hydrothermal treatment using water as the solvent is mainly carried out. Hydrothermal treatment refers to a compound synthesis method or crystal growth method carried out under the presence of heated water at a high temperature and high pressure, and there are cases where chemical reactions which would not occur in an aqueous solution at normal temperature and normal pressure, will proceed. In the present invention, by adding an aqueous solution comprising lithium to a solid or a solution comprising La cations or Ti cations, and carrying out a high temperature and high pressure treatment, the lithium, which is soluble in water under normal temperature and normal pressure, is salt-composited with titanium, and can be incorporated into a composite salt, and the precursor is obtained by isolating this composite salt from the solvent. Further, water is used as the solvent in the hydrothermal treatment, but methods (solvothermal methods) using solvents other than water (for example, organic solvents and the like) can be expected to provide the same effects.

In the hydrothermal treatment of the present invention, it is preferable to heat for on the order of 1 to 100 hours, under an environment of an absolute pressure higher than atmospheric pressure and lower than 8.7 MPa, and a temperature of 60 to 300ºC, and more preferably under an environment of an absolute pressure of 0.15 to 4.0 MPa, and a temperature of 60 to 250ºC. If the pressure and temperature are too low, the reaction will not proceed, and if the pressure and temperature are too high, impurities easily arise, and moreover, a high-grade pressure resistant vessel becomes necessary, which incurs increased production costs. Further, if the reaction time is too long, the productivity is reduced.

Further, the obtained precursor may be temporarily dispersed in a dispersion medium, and subjected to spray drying or granulation. Further, before carrying out firing, a film consisting of the precursor may be formed by a method such as coating or the like. Furthermore, between the aqueous solution preparation step and the precursor production step, or before firing the produced precursor, compounds for improving the characteristics of the solid electrolyte such as sintering agents or the like may be added to the precursor or its raw materials.

Second Method for Producing the Precursor

As a method for producing the precursor according to the present invention, a method for producing the precursor characterized in comprising a solvothermal treatment step of forming a composite salt of Li and Ti by a solvothermal treatment of a mixture comprising a Ti source, an Li source, and a solvent, and a step of adding an La source to the composite salt and forming a solid material can me mentioned. As the Ti source, it is possible to use microparticles (solid) comprising an oxide or hydroxide of Ti.

[Synthesis Method of Microparticles (Solid) Comprising Ti]

As a synthesis method of the above mentioned microparticles (solid) comprising an oxide and/or hydroxide of Ti, there are a method of gas-phase oxidation of titanium tetrachloride, a method of treating hydrous titanium oxide first with sodium hydroxide and then with hydrochloric acid, and a methods utilizing precipitation reactions, and the like. As one example, a method utilizing a precipitation reaction is shown below.

In this method, by mixing an aqueous solution comprising Ti cations and a basic aqueous solution, microparticles comprising an oxide and/or hydroxide of Ti are synthesized.

[Aqueous Solution Preparation Step]

In the aqueous solution preparation step, an aqueous solution comprising Ti cations is prepared. As the Ti cation, $Ti^{4+}$ may be mentioned. The Ti cation may be in the form of a complex with water, ammonia, oxide ions, hydroxide ions, or the later described counter-anions as the ligands. As the counter-anions of the Ti cation, other than oxide ions and hydroxide ions, for example, chlorine-containing anions such as chloride ions or the like, or nitrate anions, sulfate ions, or the like may be mentioned. The above mentioned counter-anions may be used individually, or may be used in combinations of two or more.

The above described aqueous solution is prepared, for example by dissolving a titanium compound which generates Ti cations upon dissolving, in water or in an acidic aqueous solution. As the titanium compound, for example, chlorides, oxychlorides, hydroxides, oxides, nitrates, and sulfates may be mentioned, and from the point of being easy to acquire and the point of being inexpensive, chlorides or oxychlorides are preferable. Further, from the point of being easy to dissolve, nitrates and sulfates are preferable. The form of the above mentioned titanium compound is not particularly limited, and for example, a solid such as a powder or the like, an aqueous solution, or the like may be mentioned. The above mentioned titanium compound may be used individually, or may be used in combinations of two or more.

The aqueous solution prepared in the aqueous solution preparation step preferably has a pH of less than 7, namely, it is preferably acidic. Ti cations have high aqueous solubility only in the strongly acidic range. Accordingly, the aqueous solution prepared in the aqueous solution preparation step, from the viewpoint of stability, is preferably strongly acidic (for example, a pH of no higher than 3).

[Precipitation Treatment Step]

In the precipitation treatment step, a precipitate comprising an oxide and/or hydroxide of titanium is obtained by mixing the aqueous solution comprising Ti cations obtained in the aqueous solution preparation step and a basic aqueous solution. The method of mixing the aqueous solution obtained in the aqueous solution preparation step and the basic aqueous solution is not particularly limited, and for example, a method of instilling or spraying the aqueous solution obtained in the aqueous solution preparation step into the basic aqueous solution may be mentioned.

The pH of the basic aqueous solution, from the viewpoint of precipitation speed, is preferably no less than 8. The basic aqueous solution is not particularly limited, and for example, ammonia water, and a lithium hydroxide aqueous solution may be mentioned. From the point of being easy to acquire and the point of being inexpensive, ammonia water is preferable. Further, from the viewpoint of preventing contamination of the solid electrolyte, it is preferable for the alkali cation to be a lithium ion, namely, a lithium hydroxide aqueous solution, whose cation constitutes the solid electrolyte, is preferable.

The molar equivalent of the base of the basic aqueous solution used in the precipitation treatment step, is preferably greater compared to the molar equivalent of the counter-anion (however, excluding oxide ions and hydroxide ions) of the Ti cation of the aqueous solution obtained in the aqueous solution preparation step, and more preferably is a large excess (for example, on the order of no less than two times). If the molar equivalent of the base of the basic aqueous solution is greater than the molar equivalent of the above described counter-anion, even after having mixed the aqueous solution obtained in the aqueous solution preparation step and the basic aqueous solution, it is easy to sufficiently maintain the alkalinity of the mixed solution.

The precipitate obtained in the precipitation treatment step is suitably isolated and washed. The isolation method is not particularly limited, and for example, centrifugation, decantation, and filtration may be mentioned. Further, the solvent used for washing is not particularly limited, and from the point of being easy to acquire and the point of being inexpensive, water may be preferably mentioned as an example.

In the aqueous solution preparation step according to the present invention, it is possible to use low cost raw materials such as chlorides and the like, instead of expensive alkoxides used in the sol-gel method. Further, the precipitate obtained in the precipitation treatment step can prevent the large mass reduction which accompanies the removal of organic ligands or the like when firing which arises in the sol-gel method.

[Solvothermal Treatment Step]

In the solvothermal treatment step a composite salt of Li and Ti is obtained by mixing a Ti source which is a solid comprising a Ti cation of the precipitate or the like obtained in the precipitation treatment step, a lithium source compound, and a solvent, and heating under a pressure greater than atmospheric pressure.

The lithium source compound is not particularly limited, and for example, lithium carbonate, lithium chloride, lithium fluoride, lithium hydroxide, lithium nitrate, lithium acetate, and their hydrates may be mentioned. These lithium compounds may be used individually, or may be used in combinations of two or more. Further, the form of the lithium compound may be, for example, a solid such as a powder or the like, or may be an aqueous solution, and is not particularly limited.

In the present invention, as the solvothermal treatment, a hydrothermal treatment using water as the solvent is mainly carried out. Hydrothermal treatment refers to a compound synthesis method or crystal growth method carried out under the presence of heated water at a high temperature and high pressure, and there are cases where chemical reactions which would not occur in an aqueous solution at normal temperature and normal pressure, will proceed. In the present invention, by adding an aqueous solution comprising lithium to a Ti source, and carrying out a high temperature and high pressure treatment, the lithium, which is soluble in water under normal temperature and normal pressure, is salt-composited with titanium, and can be incorporated into a composite salt. Further, water is used as the solvent in the hydrothermal treatment, but methods (solvothermal methods) using solvents other than water (for example, organic solvents and the like) can be expected to provide the same effects.

In the hydrothermal treatment of the present invention, it is preferable to heat for on the order of 1 to 100 hours, under an environment of an absolute pressure higher than atmospheric pressure and lower than 8.7 MPa, and a temperature of 60 to 300ºC, and more preferably under an environment of an absolute pressure of 0.15 to 4.0 MPa, and a temperature of 60 to 250ºC. If the pressure and temperature are too low, the reaction will not proceed, and if the pressure and temperature are too high, impurities easily arise, and moreover, a high-grade pressure resistant vessel becomes necessary, which incurs increased production costs. Further, if the reaction time is too long, the productivity is reduced.

[La Source Addition Step]

In the second method for producing the precursor, following the solvothermal treatment step, an addition of an La source is carried out. The La source addition step may be carried out before the composite salt is isolated from the solvent after the solvothermal treatment, or may be carried out after it is isolated from the solvent. The form of the La source, for example, may be a solid such as a powder or the like, or may be an aqueous solution, and is not particularly limited, but in the case of adding before the composite salt is isolated from the solvent, it is possible to use a lanthanum compound which dissolves in water or an acidic aqueous solution, and as such lanthanum compounds for example, chlorides, oxychlorides, hydroxides, oxides, and nitrates may be mentioned, and from the point of being easy to acquire and the point of being inexpensive, chlorides or oxychlorides are preferable. Further, as lanthanum compounds for the case of adding after isolation from the solvent, for example lanthanum oxide or lanthanum hydroxide or the like may be mentioned. The above mentioned lanthanum compounds may be used individually, or may be used in combinations of two or more.

Variant of the Second Method for Producing the Precursor

Further, in the step of forming adding an La source to the composite salt and forming a solid material, the La source may be simply mixed with the composite salt, but it is also possible to form a solid material by a solvothermal treatment where the La source is added. In this case, the solvothermal treatment step which forms the composite salt of Li and Ti is made the first solvothermal treatment step, and the step which forms the solid material is made the second solvothermal treatment step.

Further, in the case of carrying out the second solvothermal treatment step, the molar ratio (Li/Ti) of the lithium with respect to the titanium inside the reaction vessel where the first solvothermal treatment is carried out is preferably 0.5 to 3.5, more preferably 0.8 to 3.0, and even more preferably 1.0 to 2.5. By supplying a sufficient lithium amount with respect to the titanium amount, it is possible to decrease the non salt-composited Ti cations. On the other hand, because excessive lithium is eliminated by an acid in the second solvothermal treatment step, lithium exceeding the suitable range incurs an increase in the production costs.

[Second Solvothermal Treatment Step]

In the case of carrying out the second solvothermal treatment step, after adding an La source to the composite salt of Li and Ti obtained in the first solvothermal treatment step, the precursor is obtained by heating under a higher pressure than atmospheric pressure.

As the La source, it is possible to use a lanthanum compound which is soluble in water or an acidic aqueous solution, and as such lanthanum compounds, for example, chlorides, oxychlorides, hydroxides, oxides, and nitrates may be mentioned, and from the point of being easy to acquire and the point of being inexpensive, chlorides or oxychlorides are preferable. Further, from the point of being easy to dissolve, nitrates are preferable. The form of the above described lanthanum compound is not particularly limited, and for example, a solid such as a powder or the like, an aqueous solution, or the like may be mentioned. The above mentioned lanthanum compounds may be used individually, or may be used in combinations of two or more.

The second solvothermal treatment step may be executed under conditions where an acid is also added along with the La source. As the acid, it is possible to use an inorganic acid or an organic acid, and it is possible to use hydrochloric acid, nitric acid, sulfuric acid, formic acid, acetic acid and the like.

As the added amount of the acid, the difference between the molar ratio of the acid with respect to the titanium (acid/Ti) and the molar ratio of the lithium with respect to the titanium (Li/Ti) preferably satisfies $0.1 < [(Li/Ti) - (acid/Ti)] < 1.5$, and more preferably satisfies $0.3 < [(Li/Ti) - (acid/Ti)] < 1.1$. Further, the pH of the solution after the addition of the acid is preferably 8 to 14. By adjusting the added amount of the acid, it is possible to adjust the amount of lithium included in the solid material after the second solvothermal treatment to within the preferred range.

As a solvothermal treatment which can be used in the second solvothermal treatment step, it is possible to use the same hydrothermal treatment methods as the solvothermal treatment which can be used in the first solvothermal treatment step.

In the variant of the second method for producing the precursor which adds an acid in the second solvothermal treatment step, because a sufficient lithium amount is supplied with respect to the titanium amount in the first solvothermal treatment step, it is possible to reduce the amount of Ti cations which do not form the composite salt. As a result, it is possible to reduce impurity phases after firing, and it is also possible to make the sintered density high when carrying out sintering by heating after molding or casting.

In the variant of the second method for producing the precursor by carrying out a first solvothermal treatment step and a second solvothermal treatment step, after having formed the Li-Ti composite salt which becomes the precursor of the LTO in the first solvothermal treatment step, a solid material which becomes the precursor of the LLTO is formed in the second solvothermal step, and therefore, it can be expected that a structure where the perimeter of the LTO is coated by the LLTO is formed in the lithium titanate composite product after firing.

Third Method for Producing the Precursor

As a method for producing a precursor according to the present invention, a method for producing a precursor characterized in comprising an aqueous solution preparation step of preparing an aqueous solution comprising an Li cation and a Ti cation, a simultaneous precipitation treatment step of obtaining a precipitate comprising and oxide and/or hydroxide of La, and an oxide and/or hydroxide of Ti by mixing the aqueous solution obtained in the aqueous solution preparation step and a basic aqueous solution, a first solvothermal treatment step of forming a solid material by a solvothermal treatment of a mixture comprising the precipitate obtained in the simultaneous precipitation treatment step, an Li source compound, and a solvent, and a second solvothermal treatment step of further adding an acid and forming a solid material by a solvothermal treatment.

The aqueous solution preparation step, simultaneous precipitation treatment step, and first solvothermal treatment step of the third method for producing the precursor are the same procedures as the aqueous solution preparation step, simultaneous precipitation treatment step, and solvothermal treatment step of the first method for producing the precursor, but the molar ratio of the lithium with respect to the titanium (Li/Ti) in the reaction vessel for carrying out the first solvothermal treatment step is preferably from 0.5 to 3.5, more preferably from 0.8 to 3.0, and even more preferably from 1.0 to 2.5. By supplying a sufficient lithium amount with respect to the titanium amount, it is possible to reduce the non salt-composited Ti cations. On the other hand, excessive lithium is eliminated by the acid in the second solvothermal treatment step, and therefore, lithium in excess of the suitable range incurs an increase in production costs.

[Second Solvothermal Treatment Step]

The precursor is obtained by adding an acid to the solid material comprising an Li-Ti composite salt and an La source obtained in the first solvothermal treatment step, and heating under a higher pressure than atmospheric pressure.

As the acid, it is possible to use an inorganic acid or an organic acid, and it is possible to use hydrochloric acid, nitric acid, sulfuric acid, formic acid, acetic acid and the like.

As the added amount of the acid, the difference between the molar ratio of the acid with respect to the titanium (acid/Ti) and the molar ratio of the lithium with respect to the titanium (Li/Ti) preferably satisfies $0.1 < [(Li/Ti) - (acid/Ti)] < 1.5$, and more preferably satisfies $0.3 < [(Li/Ti) - (acid/Ti)] < 1.1$. Further, the pH of the solution after the addition of the acid is preferably 8 to 14. By adjusting the added amount of the acid, it is possible to adjust the amount of lithium included in the solid material after the second solvothermal treatment to within the preferred range.

As a solvothermal treatment which can be used in the second solvothermal treatment step, it is possible to use the same hydrothermal treatment methods as the solvothermal treatment which can be used in the first solvothermal treatment step.

In the third method for producing a precursor, because a sufficient lithium amount is supplied with respect to the titanium amount in the first solvothermal treatment step, it is possible to reduce the amount of Ti cations which do not form the composite salt. As a result, it is possible to reduce the impurity phases after firing, and it is also possible to make the sintered density high when carrying out sintering by heating after molding or casting.

Fourth Method for Producing the Precursor, Solvothermal Treatment Step of Simple Salts

Further, the precursor according to the present invention can also provide a composite salt of Li and Ti by a solvothermal treatment step of heating under a pressure higher than atmospheric pressure a mixture comprising a single salt of La, a single salt of Ti, a single salt of Li, and a solvent. Namely, it is possible to use a single salt of La as an La source, and to use a single salt of Ti as the Ti source. Further, as the solvothermal treatment step, it is possible to carry out the same method as the solvothermal treatment for the precipitate obtained in the simultaneous precipitation method.

The single salt of La is not particularly limited, and oxides and/or hydroxides of lanthanum may be mentioned. The single salt of Ti is not particularly limited, and oxides and/or hydroxides of titanium may be mentioned. The single salt of Li is not particularly limited, and for example, lithium carbonate, lithium chloride, lithium fluoride, lithium hydroxide, lithium nitrate, lithium acetate, and their hydrates may be mentioned.

Further, as the single salt of Ti, it is possible to use microparticles comprising an oxide and/or hydroxide of Ti used in the second production method of the precursor. The average particle diameter of the particles of the single salt of Ti is preferably no greater than 100 nm, more preferably no greater than 50 nm, and particularly preferably no greater than 30 nm. This is because, if the particles of the single salt of Ti are too large, the conversion of Li and Ti into a composite salt during the solvothermal treatment does not readily proceed.

[Drying Step]

After this, the precursor obtained in the solvothermal treatment step may be dried. As the conditions for the drying step, for example, 60 to 250ºC, and 1 to 10 hours may be mentioned.

Method for Producing the Composite Product

[Firing Step]

The method for producing the composite product according to the present invention is one comprising a firing step of firing the precursor according to the present invention. In this method for production, it is possible to synthesize a composite product where a lithium titanate (LTO ($Li_4Ti_5O_{12}$)) having a spinel type crystal structure which can be used as a negative electrode active material, and a lithium lanthanum titanate (for example, LLTO ($Li_{3x}La_{2/3-x}TiO_3$)) having a perovskite type crystal structure which can be used as an electrolyte, are composited. This composite product can be used as an electrode composite of a lithium ion secondary battery. The mass change rate after firing the precursor is preferably no greater than 10%.

In the firing step, it is possible to modify the crystal phase and/or to increase the crystallinity from the precursor. The modification of the crystal phase and/or increase in the crystallinity can be confirmed by powder X-ray diffraction. Modifications in the crystalline phase are reflected in modifications in the X-ray diffraction pattern, and increases in crystallinity are reflected in reductions in the width of the diffraction lines of the X-ray diffraction pattern. For example, diffraction patterns which may be identified as ($Li_{1.81}$,$H_{0.19}$)$Ti_2O_5$•$2H_2O$ [ICDD No. 00-047-0123] or $Li_{0.77}H_{1.23}$($Ti_3O_7$)•$2H_2O$ [ICDD No. 00-040-0304] are eliminated by firing. Further, where 2θ is in the vicinity of 43 to 44°, where there are diffraction lines which may be identified as ($Li_2TiO_3$)$_{1.333}$ [ICDD No. 01-075-0614], $LiTiO_2$ [ICDD No. 00-016-0223], or $Li_4Ti_5O_{12}$ [ICDD No. 00-049-0207], after firing, the diffraction line of the (400) face of LTO ($Li_4Ti_5O_{12}$) [ICDD No. 00-049-0207] is present, but because the crystallinity is increased by the firing, upon comparing the full width at half maximum of the diffraction lines before and after firing where 2θ is in the vicinity of 43 to 44°, the one after firing is smaller.

The firing method is not particularly limited, and for example, publicly known firing methods such as solid phase heat firing, spray drying, microwave firing, and the like may be applied. The firing temperature is preferably no greater than 1000ºC, more preferably 600 to 1000ºC. Low temperature firing at no greater than 1000ºC differs from the case of high temperature firing at more than 1000ºC, and a high resistance layer is not readily formed at the interface of the LTO and LLTO, and low resistance electrode composites are readily obtained. Further, from the viewpoint of restraining the volatilization of the Li during firing, and restraining the decomposition of the negative electrode active material, and from the viewpoint of lowering the firing temperature and restraining the amount of energy consumed, lower firing temperatures are more preferable, and temperatures of no greater than 900ºC (for example 600 to 900ºC) are more preferable. Further, as the atmosphere when firing, an air atmosphere, an unreactive atmosphere such as nitrogen or argon or the like, or a vacuum or the like may be utilized.

[Sintering Step]

Further, instead of the firing step, a sintering step of heating after molding or casting the precursor may be carried out.

In the molding step, a powder of the precursor is molded into a prescribed shape by applying a pressure. The powder of the precursor may be inserted into a mold, or may be casted into a sheet. In the case of casting into a sheet, for example, a method of dispersing the powder in a solvent, coating, drying the solvent, and applying a pressure using a roll press or the like may be considered. The molding pressure in the mold, for example, can be set to a range of 100 to 1000 MPa. For a sheet form, for example, the linear pressure may be in the range of 20 to 2000 N/mm. In the case of casting into a sheet, in the molding step, a positive electrode layer and a separator (solid electrolyte) layer, or a laminate structure with a precursor thereof may be formed.

Sintering may be carried out, for example, by heating the molded or casted body at no more than 1000ºC. The sintering temperature may be set in the same way as the above described firing temperature. In the sintering step, the method of heating after molding or casting is not particularly limited, and for example, resistance heating, microwave heating and the like may be applied. Further, the molding step and sintering step may be carried out at the same time, and publicly known sintering methods such as electric current sintering, spark plasma sintering and the like may be applied. As the atmosphere during sintering, an air atmosphere, an inert atmosphere such as nitrogen or argon or the like, or a vacuum or the like may be utilized. Further, the sintering time may be suitably modified in accordance with the sintering temperature, but practically, on the order of 1 to 24 hours is preferable. The cooling method is also not particularly limited, and generally may be natural cooling (cooling inside the furnace) or slow cooling.

EXAMPLES

Below, the present invention is specifically explained by examples, but the present invention is not in any way limited by these examples.

The composite products according to each example and their precursors were evaluated according to the methods shown below.

(1) Degree of Conversion into Composite Salts with respect to the Precursor

The precursor was reacted by heating to 100ºC under a carbon dioxide gas flow whereby the lithium hydroxide, lithium hydroxide monohydrate, and lithium oxide were converted to lithium carbonate, and the amount of lithium carbonate was calculated by performing elemental analysis of the C amount of the samples after conversion. From the amount of lithium carbonate, the molar equivalent of the counter-anions for the non salt-composited Li ions was determined, and the degree of conversion into composite salts was calculated. However, as a result of analysis by X-ray diffraction of a sample before and after treatment, for the case that a sample comprising salt-composited Li is heat treated at 100ºC under a carbon dioxide gas flow, it is known that a part of the salt-composited Li will also react with carbon dioxide gas and become lithium carbonate, and thus it is believed that the true degree of conversion into composite salts with respect to the samples in the examples is greater than the measured values disclosed in the present specification and tables.

(2) Content Ratio (Li:La:Ti) of Li, La with Respect to Ti in the Precursor

Calculated from the measurement results of metal elemental analysis by the ICP-AES (inductively coupled plasma atomic emission spectroscopy) method.

(3) Mass Change Rate when Firing

The mass of the precursor before firing and the mass of the composite product obtained after firing are measured, and the mass change rate is calculated from the equation below. mass change rate (%) = (mass of the composite product - mass of the precursor) x 100 / mass of the precursor Further, the lower the absolute value of the mass change rate, the smaller the mass reduction during firing, and therefore this is preferable, and 10% or less was considered successful.

(4) Crystal Structure Analysis of the Precursor and the Composite Product

The crystal structure of the samples was determined by powder X-ray diffraction measurements using the $K\alpha$ line of Cu.

[Example 1]

(1) Preparation of the Precursor

(Simultaneous Precipitation Treatment Step)

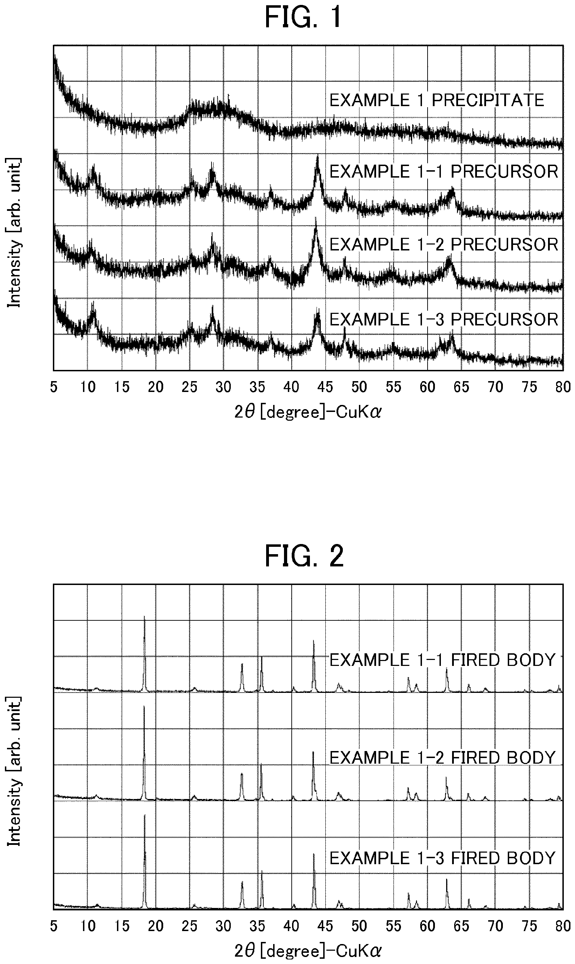

Lanthanum chloride heptahydrate was dissolved in water and the obtained solution was mixed with a titanium tetrachloride aqueous solution, and an aqueous solution with an La concentration of 0.20 mmol/g, a Ti concentration of 3.10 mmol/g, and a Cl concentration of 8.67 mmol/g was obtained. This aqueous solution was transparent, and even when left at room temperature, no precipitate occurred.
250 g of this aqueous solution was sprayed into 550 g of 28 mass% ammonia water and a precipitate was generated. This precipitate was isolated, washed with water, dried at 200ºC, and mechanically crushed. Upon carrying out a powder X-ray diffraction measurement of this precipitate, as shown in Fig. 1 (precipitate of Example 1), notable diffraction peaks could not be recognized.

[Example 1-1]

(Hydrothermal Synthesis Treatment)

9.82 g of the above mentioned precipitate was introduced into a pressure resistant vessel, and 19.95 mL of 4N lithium hydroxide aqueous solution (79.8 mmol equivalent lithium hydroxide) was added. The above mentioned pressure resistant vessel was sealed, and hydrothermal treatment was carried out by heating for 5 hours in a constant temperature bath set to 150ºC. After cooling, the precipitate was isolated, and a precursor in a solid state was obtained by drying at 200ºC.
As a result of metal elemental analysis by the ICP-AES method, it was found that the precursor comprised 5.0 mass% lithium, 8.6 mass% lanthanum, and 44.9 mass% titanium (molar ratio Li/Ti = 0.77, La/Ti = 0.066). The degree of conversion into composite salts was 56%.
Further, upon carrying out a powder X-ray diffraction measurement of the obtained precursor, as shown in Fig. 1 (precursor of Example 1-1), diffraction lines identifying $(Li_{1.81},H_{0.19})Ti_2O_5 \cdot 2H_2O$ [ICDD No. 00-047-0123] and $(Li_2TiO_3)_{1.333}$ [ICDD No. 01-075-0614] were detected, and it was understood that a composite salt represented by $Li_aH_bTi_cO_d$ ($a > 0$, $b \geq 0$, $c > 0$, $d > 0$, and $a + b + 3c \leq 2d \leq a + b + 4c$) was included. Further, the most intense diffraction line of the composite salt was where $2\theta$ was in the vicinity of 43 to 44°, and the full width at half maximum of this diffraction line was 1.1º (corresponding to a crystallite size of 8 nm).

(2) Preparation of the Composite Product

(Firing)

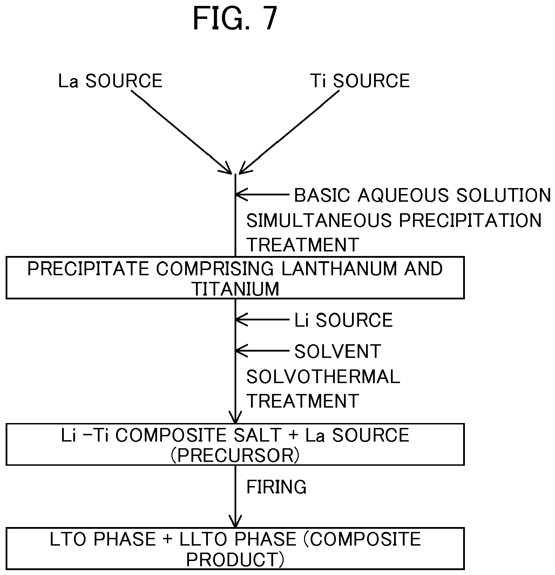

The precursor was fired in air at 850ºC for 12 hours and a fired body was obtained. The sequence of preparation conditions is shown in Table 1.
The mass change rate by firing was -4.1%. As a result of metal elemental analysis, it was found to include 5.3 mass% lithium, 9.0 mass% lanthanum, and 47.0 mass% titanium (the molar ratios were Li/Ti = 0.77, La/Ti = 0.066).
Further, upon carrying out a powder X-ray diffraction measurement of this fired body, as shown in Fig. 2 (fired body of Example 1-1), diffraction lines corresponding to spinel phase LTO ($Li_4Ti_5O_{12}$) and perovskite phase LLTO ($Li_{3x}La_{2/3-x}TiO_3$) were detected. Further, the full width at half maximum of the diffraction line at $2\theta$ = 43 to 44° was 0.15° (corresponds to a crystallite size of 59 nm).
A flowchart of the method for producing the lithium titanate composite product in Example 1-1 is shown in Fig. 7.

[Example 1-2]

(1) Preparation of the Precursor

(Hydrothermal Synthesis Treatment)

8.73 g of the precipitate produced in the simultaneous precipitation treatment step of Example 1 was introduced into a pressure resistant vessel, and 20.69 mL of 4N lithium hydroxide aqueous solution (equivalent to 82.8 mmol of lithium hydroxide) was added. The above mentioned pressure resistant vessel was sealed, and hydrothermal treatment was carried out by heating for 5 hours in a constant temperature bath set to 150ºC. After cooling, the precipitate was isolated, and a precursor in a solid state was obtained by drying at 200ºC.

As a result of metal elemental analysis by the ICP-AES method, it was found that the precursor included 4.9 mass% lithium, 7.1 mass% lanthanum, and 38.5 mass% titanium (molar ratio Li/Ti = 0.88, La/Ti = 0.064). The degree of conversion into composite salts was 47%.

Further, upon carrying out a powder X-ray diffraction measurement of this precursor, as shown in Fig. 1 (precursor of Example 1-2), diffraction lines identifying $(Li_{1.81}, H_{0.19})Ti_2O_5 \cdot 2H_2O$ [ICDD No. 00-047-0123] and $(Li_2TiO_3)_{1.333}$ [ICDD No. 01-075-0614] were detected, and it was understood that a composite salt represented by $Li_aH_bTi_cO_d$ (a > 0, b ≥ 0, c > 0, d > 0, and a + b + 3c ≤ 2d ≤ a + b + 4c) was included. Further, the most intense diffraction line of the composite salt was where 2θ was in the vicinity of 43 to 44°, and the full width at half maximum of this diffraction line was 1.1º (corresponds to a crystallite size of 8 nm).

(2) Preparation of the Composite Product

(Firing)

The precursor was fired in air at 850ºC for 12 hours and a fired body was obtained. The sequence of preparation conditions is shown in Table 1.

The mass change rate by firing was -5.3%. As a result of metal elemental analysis, it was found to include 5.8 mass% lithium, 8.3 mass% lanthanum, and 45.1 mass% titanium (the molar ratios were Li/Ti = 0.89, La/Ti = 0.064).

Further, upon carrying out a powder X-ray diffraction measurement of this fired body, as shown in Fig. 2 (fired body of Example 1-2), diffraction lines corresponding to spinel phase LTO ($Li_4Ti_5O_{12}$) and perovskite phase LLTO ($Li_{3x}La_{2/3-x}TiO_3$) were detected. Further, the full width at half maximum of the diffraction line at 2θ = 43 to 44° was 0.13° (corresponds to a crystallite size of 67 nm).

[Example 1-3]

(1) Preparation of the Precursor

(Hydrothermal Synthesis Treatment)

9.82 g of the precipitate produced in the simultaneous precipitation treatment step of Example 1 was introduced into a pressure resistant vessel, and 18.29 mL of 4N lithium hydroxide aqueous solution (equivalent to 73.2 mmol of lithium hydroxide) was added. The above mentioned pressure resistant vessel was sealed, and hydrothermal treatment was carried out by heating for 5 hours in a constant temperature bath set to 150ºC. After cooling, the precipitate was isolated, and a precursor in a solid state was obtained by drying at 200ºC.

As a result of metal elemental analysis by the ICP-AES method, it was found that the precursor comprised 4.8 mass% lithium, 8.6 mass% lanthanum, and 45.5 mass% titanium (molar ratio Li/Ti = 0.73, La/Ti = 0.065). The degree of conversion into composite salts was 54%.

Further, upon carrying out a powder X-ray diffraction measurement of this precursor, as shown in Fig. 1 (precursor of Example 1-3), diffraction lines identifying $(Li_{1.81}, H_{0.19})Ti_2O_5 \cdot 2H_2O$ [ICDD No. 00-047-0123] and $(Li_2TiO_3)_{1.333}$ [ICDD No. 01-075-0614] were detected, and it was understood that a composite salt represented by $Li_aH_bTi_cO_d$ (a > 0, b ≥ 0, c > 0, d > 0, and a + b + 3c ≤ 2d ≤ a + b + 4c) was included. Further, the most intense diffraction line of the composite salt was where 2θ was in the vicinity of 43 to 44°, and the full width at half maximum of this diffraction line was 1.2º (corresponds to a crystallite size of 8 nm).

(2) Preparation of the Composite Product

(Firing)

The precursor was fired in air at 850ºC for 12 hours and a fired body was obtained. The sequence of preparation conditions is shown in Table 1.

The mass change rate by firing was -4.0%. As a result of metal elemental analysis, it was found to include 5.1 mass% lithium, 9.0 mass% lanthanum, and 47.6 mass% titanium (the molar ratios were Li/Ti = 0.73, La/Ti = 0.065).

Further, upon carrying out a powder X-ray diffraction measurement of this fired body, as shown in Fig. 2 (fired body of Example 1-3), diffraction lines corresponding to spinel phase LTO ($Li_4Ti_5O_{12}$) and perovskite phase LLTO ($Li_{3x}La_{2/3-x}TiO_3$) were detected. Further, the full width at half maximum of the diffraction line at $2\theta$ = 43 to 44° was 0.15º (corresponds to a crystallite size of 60 nm).

[Example 2]

(1) Preparation of the Precursor

(Simultaneous Precipitation Treatment Step)

Lanthanum chloride heptahydrate was dissolved in water and the obtained solution was mixed with a titanium tetrachloride aqueous solution, and an aqueous solution with an La concentration of 0.030 mmol/g, a Ti concentration of 3.40 mmol/g, and a Cl concentration of 8.91 mmol/g was obtained. This aqueous solution was transparent, and even when left at room temperature, no precipitate occurred. 200 g of this aqueous solution was sprayed into 540 g of 28 mass% ammonia water and a precipitate was generated. This precipitate was isolated, washed with water, and mechanically crushed. Upon carrying out a powder X-ray diffraction measurement of this precipitate, notable diffraction peaks could not be recognized.

[Example 2-1]

(Hydrothermal Synthesis Treatment Step)

8.84 g of the above mentioned precipitate was introduced into a pressure resistant vessel, and 22.02 mL of 4N lithium hydroxide aqueous solution (equivalent to 88.1 mmol of lithium hydroxide) was added. The above mentioned pressure resistant vessel was sealed, and hydrothermal treatment was carried out by heating for 5 hours in a constant temperature bath set to 150ºC. After cooling, the precipitate was isolated, and a precursor in a solid state was obtained by drying at 200ºC.

As a result of metal elemental analysis, it was found that the precursor comprised 5.9 mass% lithium, 1.2 mass% lanthanum, and 48.0 mass% titanium (molar ratio Li/Ti = 0.84, La/Ti = 0.009). The degree of conversion into composite salts was 56%.

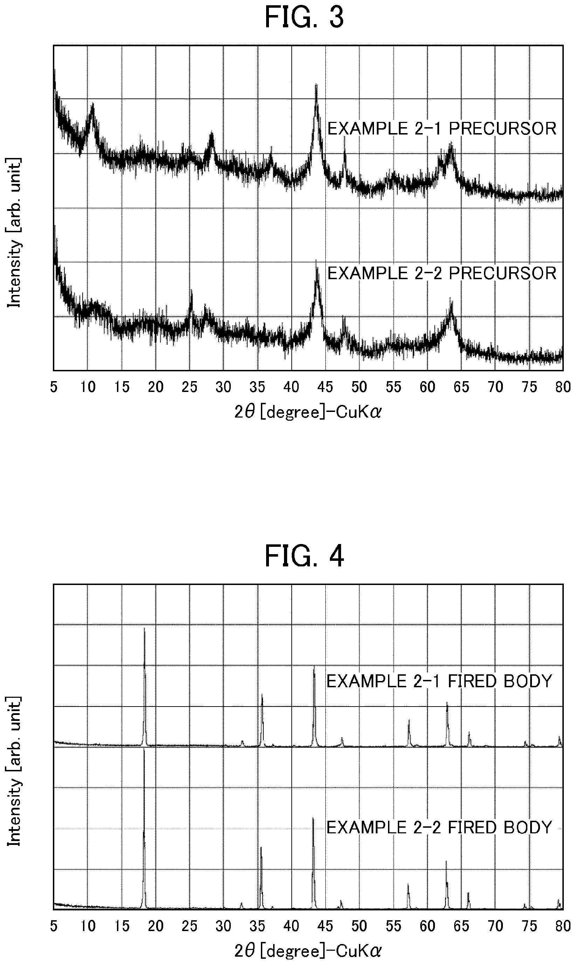

Further, upon carrying out a powder X-ray diffraction measurement of this precursor, as shown in Fig. 3 (precursor of Example 2-1), diffraction lines identifying $(Li_{1.81},H_{0.19})Ti_2O_5 \cdot 2H_2O$ [ICDD No. 00-047-0123] and $(Li_2TiO_3)_{1.333}$ [ICDD No. 01-075-0614] were detected, and it was understood that a composite salt represented by $Li_aH_bTi_cO_d$ (a > 0, b ≥ 0, c > 0, d > 0, and a + b + 3c ≤ 2d ≤ a + b + 4c) was included. Further, the most intense diffraction line of the composite salt was where $2\theta$ was in the vicinity of 43 to 44°, and the full width at half maximum of this diffraction line was 1.4º (corresponds to a crystallite size of 7 nm).

(2) Preparation of the Composite Product

A fired body was obtained by the same procedure as in Example 1. The sequence of preparation conditions is shown in Table 1, and the evaluation results are shown in Table 2.

The mass change rate by firing was -3.8%. As a result of metal elemental analysis, it was found to include 6.6 mass% lithium, 1.3 mass% lanthanum, and 53.1 mass% titanium (the molar ratios were Li/Ti = 0.85, La/Ti = 0.009). Further, upon carrying out a powder X-ray diffraction measurement of this fired body, as shown in Fig. 4 (fired body of Example 2-1), diffraction lines corresponding to spinel phase LTO ($Li_4Ti_5O_{12}$) and perovskite phase LLTO ($Li_{3x}La_{2/3-x}TiO_3$) were detected. Further, the full width at half maximum of the diffraction line at $2\theta$ = 43 to 44° was 0.16° (corresponds to a crystallite size of 57 nm).

[Example 2-2]

(1) Preparation of the Precursor

(Hydrothermal Synthesis Treatment)

8.84 g of the precipitate produced in the simultaneous precipitation treatment step of Example 2 was introduced into a pressure resistant vessel, and 21.07 mL of 4N lithium hydroxide aqueous solution (equivalent to 84.3 mmol of lithium hydroxide) was added. The above mentioned pressure resistant vessel was sealed, and hydrothermal treatment was carried out by heating for 5 hours in a constant temperature bath set to 150ºC. After cooling, the precipitate was isolated, and a precursor in a solid state was obtained by drying at 200ºC.

As a result of metal elemental analysis by the ICP-AES method, it was found that the precursor comprised 5.5 mass% lithium, 1.2 mass% lanthanum, and 47.7 mass% titanium (molar ratio Li/Ti = 0.79, La/Ti = 0.009). The degree of conversion into composite salts was 62%.

Further, upon carrying out a powder X-ray diffraction measurement of this precursor, as shown in Fig. 3 (precursor of Example 2-2), diffraction lines identifying $(Li_{1.81},H_{0.19})Ti_2O_5 \cdot 2H_2O$ [ICDD No. 00-047-0123] and $(Li_2TiO_3)_{1.333}$ [ICDD No. 01-075-0614] were detected, and it was understood that a composite salt represented by $Li_aH_bTi_cO_d$ (a > 0, b $\geq$ 0, c > 0, d > 0, and a + b + 3c $\leq$ 2d $\leq$ a + b + 4c) was included. Further, the most intense diffraction line of the composite salt was where 2θ was in the vicinity of 43 to 44°, and the full width at half maximum of this diffraction line was 1.2º (corresponds to a crystallite size of 8 nm).

(2) Preparation of the Composite Product

(Firing)

The precursor was fired in air at 850ºC for 12 hours and a fired body was obtained. The sequence of preparation conditions is shown in Table 1.

The mass change rate by firing was -2.2%. As a result of metal elemental analysis, it was found to include 6.0 mass% lithium, 1.3 mass% lanthanum, and 51.0 mass% titanium (the molar ratios were Li/Ti = 0.81, La/Ti = 0.009).

Further, upon carrying out a powder X-ray diffraction measurement of this fired body, as shown in Fig. 4 (fired body of Example 2-2), diffraction lines corresponding to spinel phase LTO ($Li_4Ti_5O_{12}$) and perovskite phase LLTO ($Li_{3x}La_{2/3-x}TiO_3$) were detected. Further, the full width at half maximum of the diffraction line at 2θ = 43 to 44° was 0.14° (corresponds to a crystallite size of 65 nm).

[Example 3]

(1) Preparation of the Precursor

(Simultaneous Precipitation Treatment Step)

Lanthanum chloride heptahydrate was dissolved in water and the obtained solution was mixed with a titanium tetrachloride aqueous solution, and an aqueous solution with an La concentration of 0.50 mmol/g, a Ti concentration of 2.59 mmol/g, and a Cl concentration of 8.23 mmol/g was obtained. This aqueous solution was transparent, and even when left at room temperature, no precipitate occurred. 163 g of this aqueous solution was sprayed into 370 g of 28 mass% ammonia water and a precipitate was generated. This precipitate was isolated, washed with water, dried at 200ºC, and mechanically crushed. Upon carrying out a powder X-ray diffraction measurement of this precipitate, diffraction peaks could not be recognized.

(Hydrothermal Synthesis Treatment Step)

8.49 g of the above mentioned precipitate was introduced into a pressure resistant vessel, and 10.74 mL of 4N lithium hydroxide aqueous solution (equivalent to 43.0 mmol of lithium hydroxide) and 12.6 g of pure water were added. The above mentioned pressure resistant vessel was sealed, and hydrothermal treatment was carried out by heating for 5 hours in a constant temperature bath set to 150ºC. After cooling, the precipitate was isolated, and a precursor in a solid state was obtained by drying at 200ºC.

As a result of metal elemental analysis by the ICP-AES method, it was found that the precursor comprised 3.2 mass% lithium, 20.1 mass% lanthanum, and 36.7 mass% titanium (molar ratio Li/Ti = 0.59, La/Ti = 0.19). The degree of conversion into composite salts was 32%.

Further, upon carrying out a powder X-ray diffraction measurement of this precursor, diffraction lines identifying $(Li_{1.81},H_{0.19})Ti_2O_5 \cdot 2H_2O$ [ICDD No. 00-047-0123] and $(Li_2TiO_3)_{1.333}$ [ICDD No. 01-075-0614] were detected, and it was understood that a composite salt represented by $Li_aH_bTi_cO_d$ (a > 0, b ≥ 0, c > 0, d > 0, and a + b + 3c ≤ 2d ≤ a + b + 4c) was included. Further, the most intense diffraction line of the composite salt was where 2θ was in the vicinity of 43 to 44°, and the full width at half maximum of this diffraction line was 0.93o (corresponds to a crystallite size of 10 nm).

(2) Preparation of the Composite Product

(Firing)

The precursor was fired in air at 850oC for 12 hours and a fired body was obtained. The sequence of preparation conditions is shown in Table 1.

The mass change rate by firing was -4.6%. As a result of metal elemental analysis, it was found to include 3.5 mass% lithium, 21.9 mass% lanthanum, and 39.9 mass% titanium (the molar ratios were Li/Ti = 0.61, La/Ti = 0.19).

Further, upon carrying out a powder X-ray diffraction measurement of this fired body, diffraction lines corresponding to spinel phase LTO ($Li_4Ti_5O_{12}$) and perovskite phase LLTO ($Li_{3x}La_{2/3-x}TiO_3$) were detected. Further, the full width at half maximum of the diffraction line at 2θ = 43 to 44o was 0.17o (corresponds to a crystallite size of 51 nm).

[Example 4] (Variant of the Second Method for Producing the Precursor)

(1) Preparation of the Precursor

(Precipitation Treatment Step)

300 g of a titanium tetrachloride aqueous solution consisting of a Ti concentration of 3.44 mmol/g and a Cl concentration of 8.89 mmol/g was sprayed into 700 g of 28 mass% ammonia water and a precipitate was generated. This precipitate was isolated, washed with water, dried at 200oC, and mechanically crushed. Upon carrying out a powder X-ray diffraction measurement of this precipitate, notable diffraction peaks could not be recognized.

(First Solvothermal Treatment Step)

8.82 g of the above mentioned precipitate was introduced into a pressure resistant vessel, and 50.09 mL of 4N lithium hydroxide aqueous solution (equivalent to 0.2 mol of lithium hydroxide). The above mentioned pressure resistant vessel was sealed, and hydrothermal treatment was carried out by heating for 12 hours in a constant temperature bath set to 120oC.

(Second Solvothermal Treatment Step)

The contents inside the pressure resistant vessel in which the above mentioned first solvothermal step was carried out were stirred, and 0.106 mol of acetic acid was added. Further, a lanthanum acetate aqueous solution consisting of an La concentration of 0.38 mmol/g was prepared separately. This aqueous solution was transparent, and even when left at room temperature, no precipitate occurred. While continuing the stirring of the contents of the above mentioned pressure resistant vessel, 17 g of this aqueous solution were added. After this, the pressure resistant vessel was sealed, and hydrothermal treatment was carried out by heating for 12 hours in a constant temperature bath set to 180oC. After natural cooling, the precipitate was isolated and washed using a water:2-propanol mixed solvent, and a precursor in solid state was obtained by drying at 200oC.

As a result of metal elemental analysis by the ICP-AES method, it was found that the precursor comprised 4.7 mass% lithium, 7.7 mass% lanthanum, and 44.6 mass% titanium (molar ratio Li/Ti = 0.73, La/Ti = 0.059). The degree of conversion into composite salts was 54%.

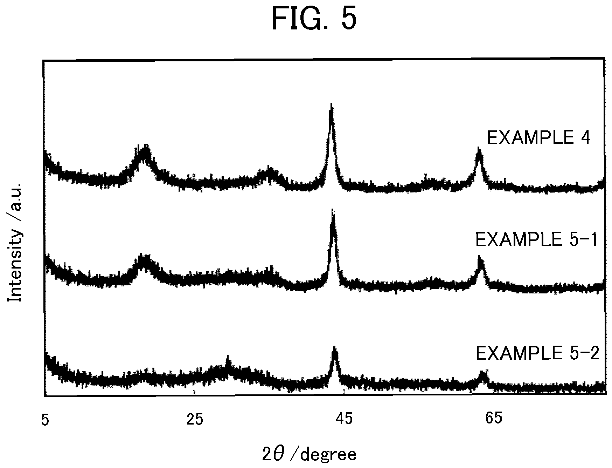

Further, upon carrying out a powder X-ray diffraction measurement of this precursor, as shown in Fig. 5 (precursor of Example 4), diffraction lines identifying ($Li_4Ti_5O_{12}$) [ICDD No. 00-049-0207] and $(Li_2TiO_3)_{1.333}$ [ICDD No. 01-075-0614] were detected. Further, the most intense diffraction line of the composite salt was where 2θ was in the vicinity of 43 to 44°, and the full width at half maximum of this diffraction line was 1.2o (corresponds to a crystallite size of 8 nm).

(2) Preparation of the Composite Product

(Firing)

The fired body was obtained by the same procedure as in Example 1. The sequence of preparation conditions is shown in Table 1, and the evaluation results are shown in Table 2.

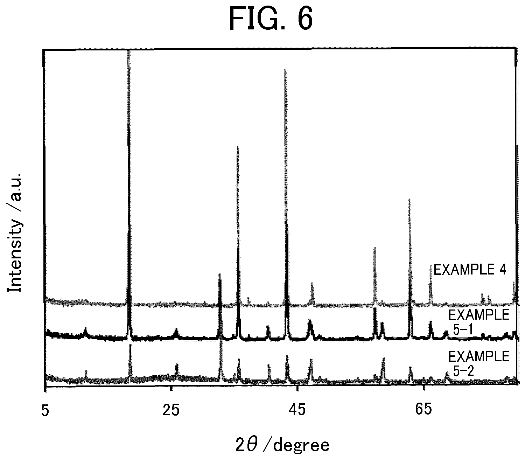

The mass change rate by firing was -5.9%. As a result of metal elemental analysis, it was found to include 5.2 mass% lithium, 8.3 mass% lanthanum, and 47.9 mass% titanium (the molar ratios were Li/Ti = 0.75, La/Ti = 0.060). Further, upon carrying out a powder X-ray diffraction measurement of this fired body, as shown in Fig. 6 (fired body of Example 4), diffraction lines identifying $(Li_{1.81},H_{0.19})Ti_2O_5 \cdot 2H_2O$ [ICDD No. 00-047-0123] and $(Li_2TiO_3)_{1.333}$ [ICDD No. 01-075-0614] were detected. Further, the full width at half maximum of the diffraction line at $2\theta = 43$ to $44°$ was $0.17°$ (corresponds to a crystallite size of 51 nm).

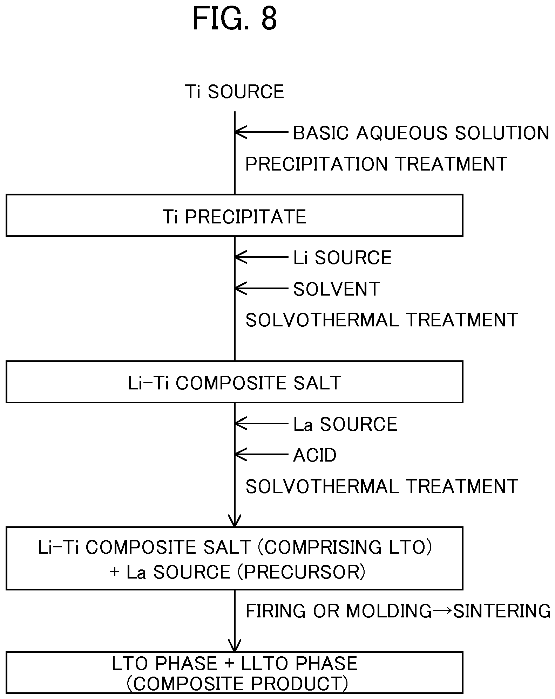

A flowchart of the method for producing the lithium titanate composite product in Example 4 is shown in Fig. 8.

[Example 5-1] (Third Method for Producing the Precursor)

(1) Preparation of the Precursor

(First Solvothermal Treatment Step)

9.28 g of the precipitate produced in the simultaneous precipitation treatment step of Example 1 was introduced into a pressure resistant vessel, and 43.59 mL of 4N lithium hydroxide aqueous solution (equivalent to 0.17 mol of lithium hydroxide) was added. The above mentioned pressure resistant vessel was sealed, and hydrothermal treatment was carried out by heating for 12 hours in a constant temperature bath set to 120ºC.

(Second Solvothermal Treatment Step)

The contents inside the pressure resistant vessel in which the above mentioned first solvothermal step was carried out were stirred, and 0.103 mol of acetic acid was added. The pressure resistant vessel was sealed, and hydrothermal treatment was carried out by heating for 12 hours in a constant temperature bath set to 180ºC. After natural cooling, the precipitate was isolated and washed using a water:2-propanol mixed solvent, and a precursor in solid state was obtained by drying at 200ºC.

As a result of metal elemental analysis by the ICP-AES method, it was found that the precursor comprised 4.8 mass% lithium, 8.3 mass% lanthanum, and 43.3 mass% titanium (molar ratio Li/Ti = 0.76, La/Ti = 0.066). The degree of conversion into composite salts was 64%.

Further, upon carrying out a powder X-ray diffraction measurement of this precursor, as shown in Fig. 5 (precursor of Example 5-1), diffraction lines identifying $(Li_4Ti_5O_{12})$ [ICDD No. 00-049-0207] and $(Li_2TiO_3)_{1.333}$ [ICDD No. 01-075-0614] were detected. Further, the most intense diffraction line of the composite salt was where $2\theta$ was in the vicinity of 43 to 44º, and the full width at half maximum of this diffraction line was 1.1º (corresponds to a crystallite size of 8 nm).

(2) Preparation of the Composite Product

(Firing)

The fired body was obtained by the same procedure as in Example 1. The sequence of preparation conditions is shown in Table 1, and the evaluation results are shown in Table 2.

The mass change rate by firing was -3.1%. As a result of metal elemental analysis, it was found to include 5.4 mass% lithium, 9.0 mass% lanthanum, and 47.5 mass% titanium (the molar ratios were Li/Ti = 0.79, La/Ti = 0.065). Further, upon carrying out a powder X-ray diffraction measurement of this fired body, as shown in Fig. 6 (fired body of Example 5-1), diffraction lines corresponding to spinel phase LTO $(Li_4Ti_5O_{12})$ and perovskite phase LLTO $(Li_{3x}La_{2/3-x}TiO_3)$ were detected. Further, the full width at half maximum of the diffraction line at $2\theta = 43$ to $44°$ was $0.23°$ (corresponds to a crystallite size of 37 nm).

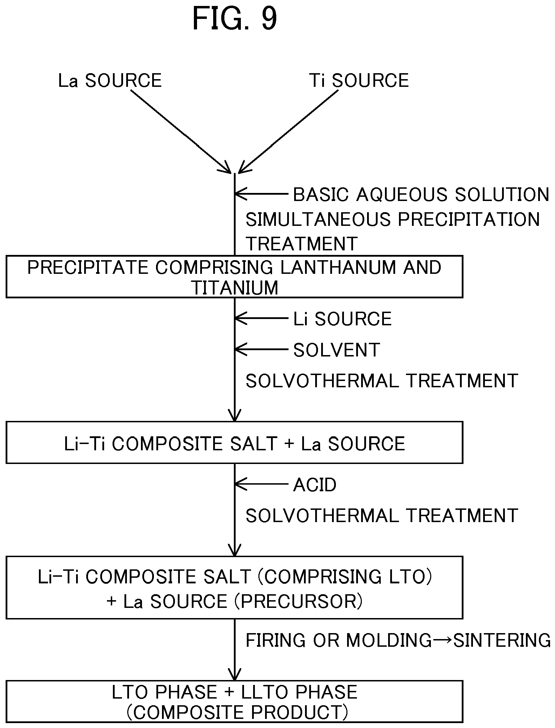

A flowchart of the method for producing the lithium titanate composite product in Examples 5-1 and 5-2 is shown in Fig. 9.

[Example 5-2] (Third Method for Producing the Precursor)

(1) Preparation of the Precursor

(First Solvothermal Treatment Step)

9.58 g of the precipitate produced in the simultaneous precipitation treatment step of Example 3 was introduced into a pressure resistant vessel, and 39.58 mL of 4N lithium hydroxide aqueous solution (equivalent to 0.16 mol of lithium hydroxide) was added. The above mentioned pressure resistant vessel was sealed, and hydrothermal treatment was carried out by heating for 12 hours in a constant temperature bath set to 120ºC.

(Second Solvothermal Treatment Step)

The contents inside the pressure resistant vessel in which the above mentioned first solvothermal step was carried out were stirred, and 0.108 mol of acetic acid was added. The pressure resistant vessel was sealed, and hydrothermal treatment was carried out by heating for 12 hours in a constant temperature bath set to 180ºC. After natural cooling, the precipitate was isolated and washed using a water:2-propanol mixed solvent, and a precursor in solid state was obtained by drying at 200ºC.

As a result of metal elemental analysis by the ICP-AES method, it was found that the precursor comprised 3.7 mass% lithium, 19.4 mass% lanthanum, and 36.1 mass% titanium (molar ratio Li/Ti = 0.70, La/Ti = 0.185). The degree of conversion into composite salts was 37%.

Further, upon carrying out a powder X-ray diffraction measurement of this precursor, as shown in Fig. 5 (precursor of Example 5-2), diffraction lines identifying $(Li_2TiO_3)_{1.333}$ [ICDD No. 01-075-0614] were detected. Further, the most intense diffraction line of the composite salt was where $2\theta$ was in the vicinity of 43 to 44º, and the full width at half maximum of this diffraction line was 1.4º (corresponds to a crystallite size of 7 nm).

(2) Preparation of the Composite Product

(Firing)

The fired body was obtained by the same procedure as in Example 1. The sequence of preparation conditions is shown in Table 1, and the evaluation results are shown in Table 2.

The mass change rate by firing was -5.7%. As a result of metal elemental analysis, it was found to include 4.3 mass% lithium, 21.7 mass% lanthanum, and 41.2 mass% titanium (the molar ratios were Li/Ti = 0.72, La/Ti = 0.182). Further, upon carrying out a powder X-ray diffraction measurement of this fired body, as shown in Fig. 6 (fired body of Example 5-2), diffraction lines corresponding to spinel phase LTO $(Li_4Ti_5O_{12})$ and perovskite phase LLTO $(Li_{3x}La_{2/3-x}TiO_3)$ were detected. Further, the full width at half maximum of the diffraction line at $2\theta = 43$ to 44° was 0.24° (corresponds to a crystallite size of 36 nm).

[Example 6] (Fourth Method for Producing the Precursor)

(1) Preparation of the Precursor

(Mixing Step)

Using 0.380 g of lanthanum hydroxide as a lanthanum source, and 15.973 g of titanium dioxide microparticles with a particle diameter of 80 nm as a titanium source (molar ratio La:Ti = 0.010:1.000), there were weighed and introduced into a ball mill jar made of zirconia, a zirconia ball and acetone were added, and a planetary ball mill treatment was carried out at 400 rpm for four hours. After this, the solvent was volatilized by drying at 80ºC for 12 hours, and the powder was ground and mixed in an agate mortar, and the obtained powder was dried for 3 hours at 200ºC.

(Hydrothermal Treatment Step)

8.177 g of the above mentioned mixture was introduced into a pressure resistant vessel, and 20.2 mL of 4N lithium hydroxide aqueous solution (equivalent to 80.8 mol of lithium hydroxide) was added. The above mentioned pressure resistant vessel was sealed, and hydrothermal treatment was carried out by heating for 15 hours in a constant temperature bath set to 180ºC. After cooling to 100ºC, the valve of the gas phase side of the sealed vessel was gradually opened, and the liquid phase was removed from the contents, and the remaining precipitate was collected, and a precursor in solid state was obtained by drying for three hours at 200ºC. The degree of conversion into composite salts with respect to the obtained precursor was 35%.

Further, upon carrying out a powder X-ray diffraction measurement of this precursor, diffraction lines identifying $(Li_2TiO_3)_{1.333}$ [ICDD No. 01-075-0614] were detected, and it was understood that a composite salt represented by $Li_aH_bTi_cO_d$ (a > 0, b ≥ 0, c > 0, d > 0, and a + b + 3c ≤ 2d ≤ a + b + 4c) was included. The evaluation results are shown in Fig. 2. Further, the most intense diffraction line of the composite salt was where 2θ was in the vicinity of 43 to 44°, and the full width at half maximum of this diffraction line was 0.25º (corresponds to a crystallite size of 36 nm).

(2) Preparation of the Composite Product

The fired body was obtained by the same procedure as in Example 1. The sequence of preparation conditions is shown in Table 1, and the evaluation results are shown in Table 2.

The mass change rate by firing was -5.8%. Further, upon carrying out a powder X-ray diffraction measurement of this fired body, diffraction lines corresponding to spinel phase LTO ($Li_4Ti_5O_{12}$) and perovskite phase LLTO ($Li_{3x}La_{2/3-x}TiO_3$) were detected. Further, the full width at half maximum of the diffraction line at 2θ = 43 to 44° was 0.15° (corresponds to a crystallite size of 60 nm).

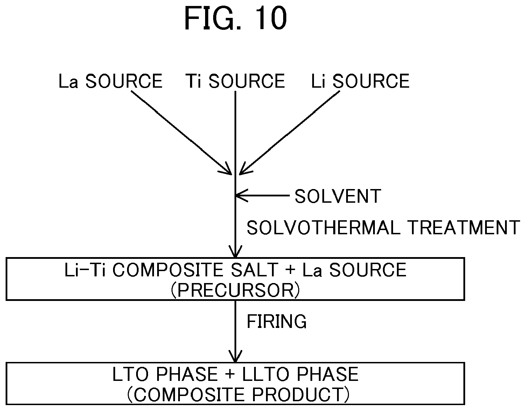

A flowchart of the method for producing the lithium titanate composite product in Example 6 is shown in Fig. 10.

[Comparative Example 1]

(1) Preparation of the Precursor

Using 5.382 g of lithium carbonate as a lithium source, 0.751 g of lanthanum nitrate hexahydrate as a lanthanum source, and 13.715 g of titanium dioxide as a titanium source (molar ratio Li:La:Ti = 0808:0.010:1.000), these were weighed and introduced into a ball mill jar made of zirconia. A zirconia ball and acetone were added, and a planetary ball mill treatment was carried out at 400 rpm for four hours.

After this, the solvent was volatilized by drying for 12 hours at 80ºC, and the powder was ground and mixed in an agate mortar. The obtained powder was dried for three hours at 200ºC and a precursor was obtained.

The degree of conversion into composite salts according to the definition was 0%. Further, upon carrying out a powder X-ray diffraction measurement of this precursor, a salt-composited oxide represented by $Li_aH_bTi_cO_d$ (a > 0, b ≥ 0, c > 0, d > 0, and a + b + 3c ≤ 2d ≤ a + b + 4c) was not included. The evaluation results are shown in Table 2.

(2) Preparation of the Fired Body

The precursor was heat treated at 850ºC for 12 hours in air and a fired body was obtained.

The mass change rate by firing was -17.2%. As a result of metal elemental analysis, it was found to include 6.2 mass% lithium, 1.5 mass% lanthanum, and 50.4 mass% titanium (the molar ratios were Li/Ti = 0.85, La/Ti = 0.010).

Further, upon carrying out a powder X-ray diffraction measurement of this fired body, diffraction lines corresponding to a spinel phase and a perovskite phase were detected.

[Comparative Example 2]

(1) Preparation of the Precursor

Using 6.161 g of lithium hydroxide as a lithium source, 0.757 g of lanthanum nitrate hexahydrate as a lanthanum source, and 13.827 g of titanium dioxide as a titanium source (molar ratio Li:La:Ti = 0808:0.010:1.000), these were weighed and introduced into a ball mill jar made of zirconia. A zirconia ball and acetone were added, and a planetary ball mill treatment was carried out at 400 rpm for four hours.

After this, the solvent was volatilized by drying at 80ºC for 12 hours, and the powder was ground and mixed in an agate mortar. The obtained powder was dried for three hours at 200ºC and the precursor was obtained.

The degree of conversion into composite salts was less than 10%. Further, upon carrying out a powder X-ray diffraction measurement of this precursor, a salt-composited oxide represented by $Li_aH_bTi_cO_d$ (a > 0, b ≥ 0, c > 0, d > 0, and a + b + 3c ≤ 2d ≤ a + b + 4c) was not included. The evaluation results are shown in Table 2.

(2) Preparation of the Fired Body

The precursor was heat treated at 850ºC for 12 hours in air and a fired body was obtained.

The mass change rate by firing was -11.0%. As a result of metal elemental analysis, it was found to include 6.4 mass% lithium, 1.5 mass% lanthanum, and 51.2 mass% titanium (the molar ratios were Li/Ti = 0.86, La/Ti = 0.010).

Further, upon carrying out a powder X-ray diffraction measurement of this fired body, diffraction lines corresponding to a spinel phase and a perovskite phase were detected.

The sequence of preparation conditions is shown in Table 1, and the evaluation results are shown in Table 2.

[Table 1]

| | Step | preparation of precursor | | | | | | | | Firing step |
|---|---|---|---|---|---|---|---|---|---|---|
| | | Aqueous solution preparation step | | Simultaneous precipitation treatment step | | Hydrothermal synthesis treatment step | | | Drying step | |
| | | Molar equivalent of counter-anions (however, excluding oxide ions and hydroxide ions) of La cation and Ti cation in aqueous solution (mmol/g) | pH of aqueous solution | Molar equivalent of base in basic aqueous solution with respect to 1 g of La or Ti aqueous solution (mmol/g) | pH of basic aqueous solution | Solution | Temperature (°C) | Pressure (MPa) | Temperature (°C) | Temperature (°C) |
| Example 1 | aqueous solution preparation step → simultaneous precipitation treatment step → hydrothermal treatment step → drying step | 8.67 | <1 | 36.2 | 12 | LiOH aqueous solution | 150 | 0.35 | 200 | 850 |

| | | preparation of precursor | | | | | | | | Firing step |
|---|---|---|---|---|---|---|---|---|---|---|
| | Step | Aqueous solution preparation step | | Simultaneous precipitation treatment step | | Hydrothermal synthesis treatment step | | | Drying step | |
| | | Molar equivalent of counter-anions (however, excluding oxide ions and hydroxide ions) of La cation and Ti cation in aqueous solution (mmol/g) | pH of aqueous solution | Molar equivalent of base in basic aqueous solution with respect to 1g of La or Ti aqueous solution (mmol/g) | pH of basic aqueous solution | Solution | Temperature (°C) | Pressure (MPa) | Temperature (°C) | Temperature (°C) |
| Example 2 | aqueous solution preparation step → simultaneous precipitation treatment step → hydrothermal treatment step → drying step | 8.91 | <1 | 44.4 | 12 | LiOH aqueous solution | 150 | 0.35 | 200 | 850 |

EP 3 168 192 A1

| | | preparation of precursor | | | | | | | | Firing step |
| | | Aqueous solution preparation step | | Simultaneous precipitation treatment step | | Hydrothermal synthesis treatment step | | | Drying step | |
| | Step | Molar equivalent of counter-anions (however, excluding oxide ions and hydroxide ions) of La cation and Ti cation in aqueous solution (mmol/g) | pH of aqueous solution | Molar equivalent of base in basic aqueous solution with respect to 1g of La or Ti aqueous solution (mmol/g) | pH of basic aqueous solution | Solution | Temperature (°C) | Pressure (MPa) | Temperature (°C) | Temperature (°C) |
| Example 3 | aqueous solution preparation step → simultaneous precipitation treatment step → hydrothermal treatment step → drying step | 8.23 | <1 | 37.3 | 12 | LiOH aqueous solution | 150 | 0.35 | 200 | 850 |

EP 3 168 192 A1

(continued)

| | Step | preparation of precursor | | | | | | | | Firing step |
| | | Aqueous solution preparation step | | Simultaneous precipitation treatment step | | Hydrothermal synthesis treatment step | | | Drying step | |
| | | Molar equivalent of counter-anions (however, excluding oxide ions and hydroxide ions) of La cation and Ti cation in aqueous solution (mmol/g) | pH of aqueous solution | Molar equivalent of base in basic aqueous solution with respect to 1g of La or Ti aqueous solution (mmol/g) | pH of basic aqueous solution | Solution | Temperature (°C) | Pressure (MPa) | Temperature (°C) | Temperature (°C) |
|---|---|---|---|---|---|---|---|---|---|---|
| Example 4 | precipitation treatment step → first hydrothermal treatment step → second hydrothermal treatment step → drying step | 8.89 | <1 | 38.4 | 12 | LiOH aqueous solution ↓ acetic acid + lanthanum acetate aqueous solution added | 120 ↓ 180 | 0.22 ↓ 0.74 | 200 | 850 |
| Example 5 | simultaneous precipitation treatment step → first hydrothermal treatment step → second hydrothermal treatment step → drying step | * Examples 5-1 and 5-2 respectively used the precipitates of Examples 1 and 3. | | | | LiOH aqueous solution ↓ acetic acid added | 120 ↓ 180 | Example 5-1: 0.22→0.89 Example 5-2: 0.22→0.88 | 200 | 850 |

(continued)

| | | preparation of precursor | | | | | | | | | Firing step |
|---|---|---|---|---|---|---|---|---|---|---|---|
| | Step | Aqueous solution preparation step | | Simultaneous precipitation treatment step | | Hydrothermal synthesis treatment step | | | Drying step | | |
| | | Molar equivalent of counter-anions (however, excluding oxide ions and hydroxide ions) of La cation and Ti cation in aqueous solution (mmol/g) | pH of aqueous solution | Molar equivalent of base in basic aqueous solution with respect to 1g of La or Ti aqueous solution (mmol/g) | pH of basic aqueous solution | Solution | Temperature (°C) | Pressure (MPa) | Temperature (°C) | | Temperature (°C) |
| Example 6 | hydrothermal treatment step using single salt of La, single salt of Ti, and single salt of Li as raw materials → drying step | | | | | LiOH aqueous solution | 180 | 0.35 | 200 | | 850 |
| Comparative Example 1 | lithium carbonate, lanthanum nitrate hexahydrate, and titanium dioxide were crushed and mixed | | | | | | | | 200 | | 850 |
| Comparative Example 2 | lithium hydroxide monohydrate, lanthanum nitrate hexahydrate, and titanium dioxide were crushed and mixed | | | | | | | | 200 | | 850 |

\* In the hydrothermal synthesis treatment steps of Examples 4 and 5, the conditions of the first hydrothermal treatment step are given before the arrows, and the conditions of the second hydrothermal treatment step are given after the arrows.

[Table 2]

| | Precursor | | | Fired body | | Mass change rate by firing (%) |
|---|---|---|---|---|---|---|
| | Degree of conversion into composite salts (%) | Composition ratio (molar ratio) Li/La/Ti | Full width at half maximum of most intense diffraction line of composite salt (degrees) | Structure | Impurity phase | |
| Example 1-1 | 56% | 0.77/0.066/1 | 1.1 | composite of crystals having spinel structure and crystals having perovskite structure | none detected | -4.1 |
| Example 1-2 | 47 | 0.88/0.064/1 | 1.1 | same as above | small quantity of impurity assumed to be $Li_2TiO_3$ detected | -5.3 |
| Example 1-3 | 54 | 0.73/0.065/1 | 1.2 | same as above | small quantity of impurity assumed to be $La_4Ti_9O_{24}$ | -4.0 |
| Example 2-1 | 56 | 0.84/0.009/1 | 1.4 | composite of crystals having spinel structure and crystals having perovskite structure | small quantity of impurity assumed to be $Li_2TiO_3$ detected | -3.8 |
| Example 2-2 | 62 | 0.79/0.009/1 | 1.2 | same as above | none detected | -2.2 |
| Example 3 | 32 | 0.59/0.19/1 | 0.93 | composite of crystals having spinel structure and crystals having perovskite structure | none detected | -4.6 |
| Example 4 | 54 | 0.73/0.059/1 | 1.2 | composite of crystals having spinel structure and crystals having perovskite structure | none detected | -5.9 |

(continued)

| | Precursor | | | Fired body | | Mass change rate by firing (%) |
|---|---|---|---|---|---|---|
| | Degree of conversion into composite salts (%) | Composition ratio (molar ratio) Li/La/Ti | Full width at half maximum of most intense diffraction line of composite salt (degrees) | Structure | Impurity phase | |
| Example 5-1 | 64 | 0.76/0.066/1 | 1.1 | composite of crystals having spinel structure and crystals having perovskite structure | none detected | -3.1 |
| Example 5-2 | 37 | 0.70/0.185/1 | 1.4 | same as above | none detected | -5.7 |
| Example 6 | 35 | charging ratio 0.808/0.010/1.000 | 0.25 | composite of crystals having spinel structure and crystals having perovskite structure | none detected | -5.8 |
| Comparative Example 1 | 0 | charging ratio 0.808/0.010/1.000 | (no diffraction lines of composite salt) | composite of crystals having spinel structure and crystals having perovskite structure | small quantity of impurity assumed to be $Li_2TiO_3$ detected | -17.2 |
| Comparative Example 2 | <10 | charging ratio 0.808/0.010/1.000 | (no diffraction lines of composite salt) | same as above | small quantity of impurity assumed to be $Li_2TiO_3$ detected | -11.0 |

In Examples 1-1 to 1-3, 2-1 to 2-2, and 3 where a precursor was obtained by adding a lithium source compound to a precipitate including lanthanum and titanium obtained in a simultaneous precipitation treatment step; Example 4 where a precursor was obtained by carrying out a first hydrothermal treatment where lithium was added to a precipitate including titanium obtained in a precipitation treatment, and a second hydrothermal treatment where lanthanum was added; Examples 5-1 and 5-2 where a precursor was obtained by carrying out a first hydrothermal treatment where lithium was added to a precipitate including lanthanum and titanium obtained in a simultaneous precipitation treatment and a second hydrothermal treatment where an acid was added; and Example 6 where a precursor was obtained by mixing respective single salts of lithium, lanthanum and titanium and carrying out a hydrothermal treatment; by firing the precursors at 850ºC, spinel phase LTO ($Li_4Ti_5O_{12}$) and perovskite phase LLTO ($Li_{0.33}La_{0.56}TiO_3$) were obtained. Further, the obtained composite products had a small absolute value of the mass change rate by firing of no greater than 10%.

On the other hand, in Comparative Examples 1 and 2, which only simply mixed respective single salts of lithium, lanthanum, and titanium, by firing the precursor at 850ºC which had a low degree of conversion into composite salts, spinel phase LTO ($Li_4Ti_5O_{12}$) and perovskite phase LLTO ($Li_{0.33}La_{0.56}TiO_3$) were obtained, but the absolute value of the mass change rate by firing was large.

Evaluation of the Sintered Density

The precursors obtained in Example 1-1, Example 1-3, Example 4, and Example 5-1 were packed into a die with a diameter of 13 mm, and press-molded at 740 MPa. The molded bodies were sintered in air at 850ºC for 12 hours, and sintered bodies were obtained. From the lattice constants of LTO and LLTO, the theoretical density was determined, and by dividing the true density by the theoretical density, the sintered density was determined.

The sintered density averaged over two times in Example 1-1 was 78.5%, the sintered density averaged over two times in Example 1-3 was 80.4%, the sintered density averaged over two times in Example 2-1 was 79.0%, the sintered density averaged over two times in Example 2-2 was 80.2%, the sintered density averaged over five times in Example 4 was 84.6%, and the sintered density averaged over five times in Example 5-1 was 85.3%. It is thought that the sintered density was increased in Examples 4 and 5-1 because $Li_4Ti_5O_{12}$ was already formed in the precursor stage.

**Claims**

1. A precursor of a lithium titanate composite product, for forming a composite product of lithium titanate and lithium lanthanum titanate by firing, consisting of
a solid material comprising a composite salt of Li and Ti, and an La source compound.

2. The precursor according to claim 1, wherein the composite salt is represented by $Li_aH_bTi_cO_d$ ($a > 0$, $b \geq 0$, $c > 0$, $d > 0$, and $a + b + 3c \leq 2d \leq a + b + 4c$).

3. The precursor according to claim 1 or 2, wherein the solid material is obtained by a solvothermal method.

4. The precursor according to any one of claims 1 to 3, wherein the composite salt has a degree of conversion into composite salts (%) defined by the formula below of no less than 30%:

degree of conversion into composite salts (%) = (molar equivalent of Li - molar equivalent of counter-anion) x 100 / (molar equivalent of Li).

5. The precursor according to any one of claims 1 to 4, wherein in an X-ray diffraction pattern of the solid material, a full width at half maximum of a diffraction line with a greatest intensity of the composite salt is no less than 0.25º.

6. The precursor according to any one of claims 1 to 5, wherein La/Ti which is a molar ratio of La with respect to Ti in the solid material is 0.0001 < La/Ti < 0.66.

7. The precursor according to any one of claims 1 to 5, wherein (Li + La)/Ti which is a ratio of a total of a molar number of Li and a molar number of La with respect to a molar number of Ti included in the solid material is 0.67 < (Li + La)/Ti < 1.1.

8. A method for producing the precursor of a lithium titanate composite product according to claim 1, comprising

a step of forming the solid material by heating a mixture comprising an La source, a Ti source, an Li source, and a solvent by a solvothermal treatment.

9. A method for producing the precursor of a lithium titanate composite product according to claim 1, comprising

a simultaneous precipitation treatment step of obtaining a precipitate comprising an oxide and/or hydroxide of La, and an oxide and/or hydroxide of Ti, by mixing an aqueous solution comprising an La cation and a Ti cation and a basic aqueous solution, and
a step of forming the solid material by a solvothermal treatment of a mixture comprising the precipitate obtained in the simultaneous precipitation treatment step, an Li source, and a solvent.

10. A method for producing the precursor of a lithium titanate composite product according to claim 1, comprising

a solvothermal treatment step of forming a composite salt of Li and Ti by a solvothermal treatment of a mixture comprising a Ti source, an Li source, and a solvent, and
a step of adding an La source to the composite salt and forming the solid material.

**11.** A method for producing the precursor of a lithium titanate composite product according to claim 1, comprising

a first solvothermal treatment step of forming a composite salt of Li and Ti by a solvothermal treatment of a mixture comprising a Ti source, an Li source, and a solvent, and
a second solvothermal treatment step of adding an La source to the composite salt and forming the solid material by a solvothermal treatment.

**12.** A method for producing the precursor of a lithium titanate composite product according to claim 1, comprising

a simultaneous precipitation treatment step of obtaining a precipitate comprising an oxide and/or hydroxide of La, and an oxide and/or hydroxide of Ti, by mixing an aqueous solution comprising an La cation and a Ti cation and a basic aqueous solution,
a first solvothermal step of forming a solid material by a solvothermal treatment of a mixture comprising the precipitate obtained in the simultaneous precipitation treatment step, an Li source, and a solvent, and
a second solvothermal treatment step of further adding an acid and forming the solid material by a solvothermal treatment.

**13.** The method for producing the precursor according to claim 9 or 12, wherein a molar equivalent of a base of the basic aqueous solution used in the simultaneous precipitation treatment step is greater than a molar equivalent of a counter-anion (however, excluding oxide ions and hydroxide ions) of the La cation and the Ti cation in the aqueous solution obtained in the aqueous solution preparation step.

**14.** The method for producing the precursor according to claim 9 or 12, wherein a pH of the aqueous solution obtained in the aqueous solution preparation step is less than 7, and a pH of the basic aqueous solution used in the simultaneous precipitation treatment step is no less than 8.

**15.** The method for producing the precursor according to claim 8, wherein a single salt of La is used as the La source, and a single salt of Ti is used as the Ti source.

**16.** A method for producing a composite product, comprising a step of obtaining a precursor by the method for producing the precursor according to any one of claims 8 to 15, and
a firing step of firing the precursor.

**17.** A method for producing a composite product comprising a firing step of firing the precursor according to any one of claims 1 to 7.

**18.** The method for producing a composite product according to claim 16 or 17, wherein, in the firing step, the precursor is fired at no higher than 1000$^{\circ}$C.

# FIG. 1

# FIG. 2

# FIG. 3

EXAMPLE 2-1 PRECURSOR

EXAMPLE 2-2 PRECURSOR

Intensity [arb. unit]

$2\theta$ [degree]-CuK$\alpha$

# FIG. 4

EXAMPLE 2-1 FIRED BODY

EXAMPLE 2-2 FIRED BODY

Intensity [arb. unit]

$2\theta$ [degree]-CuK$\alpha$

# FIG. 5

# FIG. 6

# FIG. 7

La SOURCE                     Ti SOURCE

⟵——— BASIC AQUEOUS SOLUTION
SIMULTANEOUS PRECIPITATION
TREATMENT

| PRECIPITATE COMPRISING LANTHANUM AND TITANIUM |
|---|

⟵——— Li SOURCE

⟵——— SOLVENT
SOLVOTHERMAL
TREATMENT

| Li –Ti COMPOSITE SALT + La SOURCE (PRECURSOR) |
|---|

FIRING

| LTO PHASE + LLTO PHASE (COMPOSITE PRODUCT) |
|---|

# FIG. 8

Ti SOURCE

←—— BASIC AQUEOUS SOLUTION

PRECIPITATION TREATMENT

| Ti PRECIPITATE |
|----------------|

←—— Li SOURCE

←—— SOLVENT

SOLVOTHERMAL TREATMENT

| Li-Ti COMPOSITE SALT |
|----------------------|

←—— La SOURCE

←—— ACID

SOLVOTHERMAL TREATMENT

| Li-Ti COMPOSITE SALT (COMPRISING LTO) + La SOURCE (PRECURSOR) |
|---|

FIRING OR MOLDING→SINTERING

| LTO PHASE + LLTO PHASE (COMPOSITE PRODUCT) |
|---|

EP 3 168 192 A1

# FIG. 9

La SOURCE          Ti SOURCE

←—— BASIC AQUEOUS SOLUTION
SIMULTANEOUS PRECIPITATION
TREATMENT

| PRECIPITATE COMPRISING LANTHANUM AND TITANIUM |
|---|

←—— Li SOURCE

←—— SOLVENT

SOLVOTHERMAL TREATMENT

| Li–Ti COMPOSITE SALT + La SOURCE |
|---|

←—— ACID

SOLVOTHERMAL TREATMENT

| Li–Ti COMPOSITE SALT (COMPRISING LTO) + La SOURCE (PRECURSOR) |
|---|

FIRING OR MOLDING→SINTERING

| LTO PHASE + LLTO PHASE (COMPOSITE PRODUCT) |
|---|

# FIG. 10

La SOURCE Ti SOURCE Li SOURCE

← SOLVENT

SOLVOTHERMAL TREATMENT

| Li–Ti COMPOSITE SALT + La SOURCE (PRECURSOR) |
|---|

FIRING

| LTO PHASE + LLTO PHASE (COMPOSITE PRODUCT) |
|---|

## INTERNATIONAL SEARCH REPORT

| International application No. |
|---|
| PCT/JP2015/071625 |

**A. CLASSIFICATION OF SUBJECT MATTER**
*C01G23/00*(2006.01)i, *H01M4/485*(2010.01)i, *H01M10/0562*(2010.01)n

According to International Patent Classification (IPC) or to both national classification and IPC

**B. FIELDS SEARCHED**

Minimum documentation searched (classification system followed by classification symbols)
C01G23/00, H01M4/485, H01M10/0562

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2014-24726 A (Toho Titanium Co., Ltd.), 06 February 2014 (06.02.2014), claims (Family: none) | 1-18 |
| A | JP 2013-105646 A (Seiko Epson Corp.), 30 May 2013 (30.05.2013), claims & US 2013/0122376 A1 all claims | 1-18 |
| A | JP 2012-184138 A (Seiko Epson Corp.), 27 September 2012 (27.09.2012), claims (Family: none) | 1-18 |

| ☒ Further documents are listed in the continuation of Box C. | ☐ See patent family annex. |
|---|---|

\*      Special categories of cited documents:
"A"    document defining the general state of the art which is not considered    to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search 05 October 2015 (05.10.15) | Date of mailing of the international search report 13 October 2015 (13.10.15) |
|---|---|
| Name and mailing address of the ISA/ Japan Patent Office 3-4-3,Kasumigaseki,Chiyoda-ku, Tokyo 100-8915,Japan | Authorized officer Telephone No. |

Form PCT/ISA/210 (second sheet) (July 2009)

**INTERNATIONAL SEARCH REPORT**

International application No.

PCT/JP2015/071625

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-184137 A  (Seiko Epson Corp.), 27 September 2012 (27.09.2012), claims (Family: none) | 1-18 |
| A | JP 2013-73907 A  (Toyota Motor Corp.), 22 April 2013 (22.04.2013), claims & US 2013/0084406 A1 all claims | 1-18 |
| A | JP 2011-65982 A  (Seiko Epson Corp.), 31 March 2011 (31.03.2011), claims & US 2011/0045355 A1 all claims & CN 101997111 A | 1-18 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012104280 A
- JP 2013140762 A
- JP 2010033877 A
- JP 2013080637 A

**Non-patent literature cited in the description**

- *Journal of Power Sources,* 2012, vol. 214, 220-226